# EUROPEAN PATENT APPLICATION

(11) **EP 4 808 213 A1**
(43) Date of publication of application: **16.09.2026**
(21) Application number: 24889107.9
(22) Date of filing: 06.11.2024
(51) Int. Cl.: H04W 40/22, H04W 40/04, H04W 40/12, H04W 8/00, H04W 84/12

(54) **DISCOVERY AND SELECTION OF RELAY STATION IN WIRELESS LAN SYSTEM**

(30) Priority: 07.11.2023 KR 20230153000
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR); JANG, Insun, Seoul 06772 (KR)
(74) Representative: Jung, Minkyu
(86) International application number: PCT/KR2024/017367
(87) International publication number: WO 2025/100920

(57) **Abstract**

The technical features of the present specification may relate to a method and device performed in a wireless local area network (WLAN) system. For example, the method of the present specification may include transmitting, by a non-access point (non-AP) station (STA), a discovery frame to a first relay STA. For example, the discovery frame may include identification information related to at least one relay STA obtained by the non-AP STA. For example, the method of the present specification may include receiving, based on the discovery frame, a response frame from the first relay STA. For example, the response frame may include identification information related to the first relay STA, and link quality information between the first relay STA and the non-AP STA.

## Description

### TECHNICAL FIELD

The present specification relates to a wireless local area network (WLAN) system, and more specifically, relates to a technical feature of discovering and selecting a relay station of a wireless LAN system.

### BACKGROUND ART

A wireless LAN or wireless local area network (WLAN) has been improved in various ways. For example, an EHT (Extreme high throughput) specification may use newly proposed increased bandwidth, an improved PPDU (physical protocol data unit) structure, an improved sequence, a HARQ (Hybrid automatic repeat request) technique, and the like. The EHT specification may be referred to as the IEEE 802.11be specification.

In order to support high throughput and high data rates, the EHT specification may use wide bandwidth (e.g., 160/320 MHz), 16 streams, and/or multi-link (or multi-band) operation, and the like.

In the EHT specification, wide bandwidth (e.g., 160/240/320 MHz) may be used for high throughput. In addition, preamble puncturing and multiple RU transmission may be used to efficiently use bandwidth.

A WLAN system may be further improved through a UHR (Ultra High Reliability) specification. The UHR system may be referred to as the IEEE 802.11bn specification. The UHR system aims to support ultra-high reliability in signal transmission to a STA. For this, various technologies are being considered to support high throughput, low latency, and extended range.

### SPECIFICATION

### TECHNICAL PROBLEM

The present specification relates to relay operation/procedure/transmission in a wireless LAN system. The technical feature of the present specification proposes a relay station in a next-generation wireless LAN system in order to extend reliable transmission and coverage/range for not only outdoor but also various IoT devices.

In order to efficiently perform the relay operation/procedure/transmission proposed in the present specification, detection and/or discovery of at least one relay STA existing near a non-AP STA is required. The present specification proposes a technical feature whereby a non-AP STA efficiently discovers and detects at least one relay STA.

### TECHNICAL SOLUTION

The present specification proposes various technical features. The various technical features of the present specification may be applied to various types of STAs/devices.

For example, the technical feature of the present specification may relate to a method performed in a wireless local area network (WLAN) system. For example, the method of the present specification may include transmitting, by a non-access point (non-AP) station (STA), a discovery frame to a first relay STA. For example, the discovery frame may include identification information related to at least one relay STA obtained by the non-AP STA. For example, the method of the present specification may include receiving, based on the discovery frame, a response frame from the first relay STA. For example, the response frame may include identification information related to the first relay STA, and link quality information between the first relay STA and the non-AP STA.

The above technical feature may be applied to a non-AP STA and at least one relay STA.

### ADVANTAGEOUS EFFECTS

The technical features described in the present specification can generate various advantageous effects. Due to the technical features of the present specification, a non-AP STA or end-STA can perform discovery/detection of at least one relay STA. Through the efficient discovery and detection method proposed by the present specification, accurate information related to relay STAs located around a non-AP STA can be identified, and moreover, accurate information related to link quality for relay STAs located around the non-AP STA can be identified. Through this, a non-AP can precisely control a relay STA. Through this, stable signal transmission (i.e., reliable signal transmission) within a BSS (basic service set) becomes possible. In addition, through efficient relay STA operation, it becomes possible to increase the coverage of a wireless LAN signal and to eliminate holes where signals cannot reach.

### BRIEF DESCRIPTION OF THE DRAWINGS

Figure 1 illustrates an example of a transmitting device and/or receiving device of the present specification.
Figure 2 is a conceptual diagram illustrating a structure of a wireless LAN (WLAN).
Figure 3 is a diagram illustrating a general link setup process.
Figure 4 illustrates an embodiment of a multi-link (ML).
Figure 5 illustrates a PPDU (physical protocol data unit) transmitted/received at a STA of the present specification.
Figure 6 is a diagram illustrating an arrangement of resource units (RUs) used for a 20 MHz PPDU.
Figure 7 is a diagram illustrating an arrangement of resource units (RUs) used for a 40 MHz PPDU.
Figure 8 is a diagram illustrating an arrangement of resource units (RUs) used for an 80 MHz PPDU.
Figure 9 illustrates an operation according to UL-MU.
Figure 10 illustrates an example of a channel used/supported/defined within a 2.4 GHz band.
Figure 11 illustrates an example of a channel used/supported/defined within a 5 GHz band.
Figure 12 illustrates an example of a channel used/supported/defined within a 6 GHz band.
Figure 13 illustrates an example of a header of a MAC frame.
Figure 14 illustrates a modified example of a transmitting device and/or receiving device of the present specification.
Figure 15 illustrates characteristics of a relay STA controlled by an AP.
Figure 16 is an example of a management frame including information related to a relay operation.
Figure 17 illustrates an example of a discovery frame transmitted by a non-AP STA.
Figure 18 is a diagram illustrating a procedure performed at a relay STA and a non-AP STA.
Figure 19 is a procedure flowchart based on an example of the present specification.
Figure 20 is an example of a procedure flowchart of the present specification.
Figure 21 is an example of a procedure flowchart of the present specification.

### DESCRIPTION OF EXEMPLARY EMBODIMENTS

As used herein, "A or B" can mean "only A," "only B," or "both A and B." Alternatively, "A or B" can be interpreted as "A and/or B." For example, as used herein, "A, B or C" can mean "only A," "only B," "only C," or "any combination of A, B, and C."

As used herein, a slash (/) or a comma can mean "and/or." For example, "A/B" can mean "A and/or B." Accordingly, "A/B" can mean "only A," "only B," or "both A and B." For example, "A, B, C" may mean "A, B, or C."

In the present specification, "at least one of A and B" may mean "only A," "only B," or "both A and B." Furthermore, in the present specification, the expressions "at least one of A or B" or "at least one of A and/or B" may be interpreted identically to "at least one of A and B."

Furthermore, parentheses used herein may mean "for example." Specifically, when "control information (UHR-Signal field)" is indicated, the "UHR-Signal field" may be suggested as an example of "control information." In other words, the "control information" in the present specification is not limited to the "UHR-Signal field," and the "UHR-Signal field" may be proposed as an example of "control information." Furthermore, even when "control information (UHR-Signal field)" is indicated, the "UHR-Signal field" may be proposed as an example of "control information."

Furthermore, "a/an" as used herein may mean "at least one" or "one or more." Furthermore, terms ending in "(s)" may mean "at least one" or "one or more."

Furthermore, the expressions "based on," "on the basis of," or "according to" used in the present specification mean "based at least in part on," and do not mean "based solely on" a single element one.

Technical features individually described in a single drawing in the present specification may be implemented individually or simultaneously.

The following examples of the present specification may be applied to various wireless communication systems. For example, the following examples of the present specification may be applied to wireless local area network (WLAN) systems. For example, the present specification may be applied to the IEEE 802.11a/g/n/ac/ax/be/bn standards. Furthermore, the examples of the present specification may also be applied to the Ultra High Reliability (UHR) standard or next-generation WLAN standards that enhance IEEE 802.11bn. Additionally, examples of the present specification may be applied to mobile communication systems. For example, it may be applied to mobile communication systems based on Long Term Evolution (LTE) and its evolutions based on the 3rd Generation Partnership Project (3GPP) standards.

Hereinafter, to explain the technical features of the present specification, technical features to which the present specification can be applied will be described.

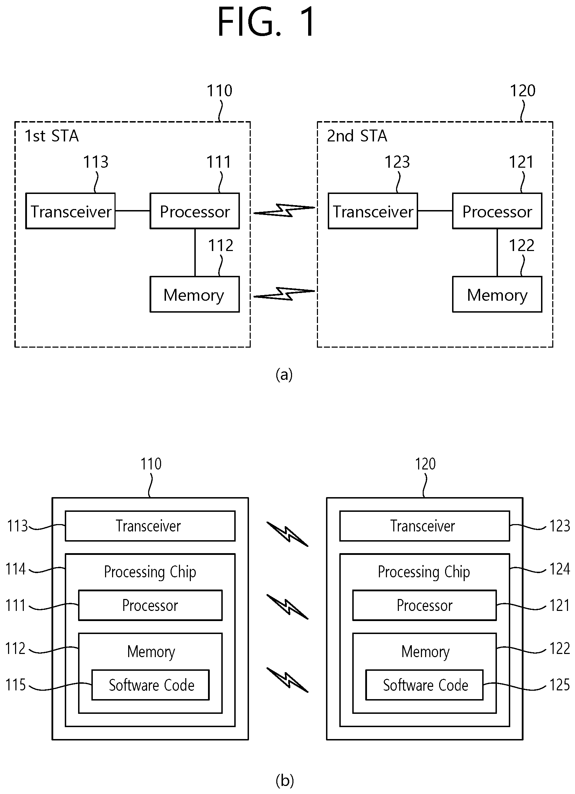

Figure 1 illustrates an example of a transmitting device and/or receiving device of the present specification.

The example of Figure 1 can perform various technical features described below. Figure 1 relates to at least one STA (station). For example, the STAs (110, 120) of the present specification may also be referred to by various names, such as a mobile terminal, a wireless device, a wireless transmit/receive unit (WTRU), a user equipment (UE), a mobile station (MS), a mobile subscriber unit (MS), or simply a user. The STAs (110, 120) of the present specification may also be referred to by various names, such as a network, a base station, a Node-B, an access point (AP), a repeater, a router, or a relay. The STAs (110, 120) of the present specification may be referred to by various names, such as a receiving apparatus, a transmitting apparatus, a receiving STA, a transmitting STA, a receiving device, or a transmitting device.

For example, the STAs (110, 120) of the present specification may function as an access point (AP) or a non-AP. That is, the STAs (110, 120) of the present specification may perform the functions of an AP and/or a non-AP STA. In the present specification, an AP may also be referred to as an AP STA.

The STAs (110, 120) of the present specification may support various communication standards other than the IEEE 802.11 standard. For example, they may support communication standards based on the 3GPP standard (e.g., LTE, LTE-A, 5G NR standards). Furthermore, the STAs of the present specification may be implemented in various devices, such as mobile phones, vehicles, and personal computers. Additionally, the STA of the present specification can support communication for various communication services, such as voice calls, video calls, data communications, and autonomous driving (self-driving).

In the present specification, the STAs (110, 120) may include a medium access control (MAC) and a physical layer interface for wireless media that conforms to the IEEE 802.11 standard.

The STAs (110, 120) are described below based on sub-drawing (a) of FIG. 1.

The first STA (110) may include a processor (111), memory (112), and a transceiver (113). The illustrated processor, memory, and transceiver may be implemented as separate chips, or at least two blocks/functions may be implemented on a single chip.

The transceiver (113) of the first STA performs signal transmission and reception operations. Specifically, it can transmit and receive IEEE 802.11 packets (e.g., IEEE 802.11a/b/g/n/ac/ax/be, etc.).

For example, the first STA (110) can perform the intended operation of an AP. For example, the processor (111) of the AP can receive a signal via the transceiver (113), process the received signal, generate a transmission signal, and perform control for signal transmission. The memory (112) of the AP can store a signal received via the transceiver (113) (e.g., a received signal) and a signal to be transmitted via the transceiver (e.g., a transmitted signal).

For example, the second STA (120) can perform the intended operation of a non-AP STA. For example, the transceiver (123) of the non-AP can perform signal transmission and reception operations. Specifically, it can transmit and receive IEEE 802.11 packets (e.g., IEEE 802.11a/b/g/n/ac/ax/be, etc.).

For example, the processor (121) of the non-AP STA can receive signals via the transceiver (123), process the received signals, generate transmission signals, and perform control for signal transmission. The memory (122) of the non-AP STA can store signals received via the transceiver (123) (e.g., received signals) and signals to be transmitted via the transceiver (e.g., transmitted signals).

For example, the operations of a device designated as an AP in the following specification can be performed by the first STA (110) or the second STA (120). For example, if the first STA (110) is an AP, the operation of the device indicated as the AP is controlled by the processor (111) of the first STA (110), and a related signal may be transmitted or received through the transceiver (113) controlled by the processor (111) of the first STA (110). In addition, control information related to the operation of the AP or the transmission/reception signal of the AP may be stored in the memory (112) of the first STA (110). In addition, if the second STA (110) is an AP, the operation of the device indicated as the AP is controlled by the processor (121) of the second STA (120), and a related signal may be transmitted or received through the transceiver (123) controlled by the processor (121) of the second STA (120). In addition, control information related to the operation of the AP or the transmission/reception signals of the AP may be stored in the memory (122) of the second STA (110).

For example, the operation of a device indicated as a non-AP (or User-STA) in the following specification may be performed in the first STA (110) or the second STA (120). For example, if the second STA (120) is a non-AP, the operation of the device indicated as a non-AP may be controlled by the processor (121) of the second STA (120), and related signals may be transmitted or received through the transceiver (123) controlled by the processor (121) of the second STA (120). In addition, control information related to the operation of the non-AP or the transmission/reception signals of the AP may be stored in the memory (122) of the second STA (120). For example, if the first STA (110) is a non-AP, the operation of a device designated as a non-AP is controlled by the processor (111) of the first STA (110), and related signals may be transmitted or received through a transceiver (113) controlled by the processor (111) of the first STA (120). Furthermore, control information related to the operation of the non-AP or the transmission/reception signals of the AP may be stored in the memory (112) of the first STA (110).

In the following specifications, (transmitting/receiving) STA, first STA, second STA, STA1, STA2, AP, first AP, second AP, AP1, AP2, (transmitting/receiving) Terminal, (transmitting/receiving) device, (transmitting/receiving) apparatus, network, etc., may refer to the STA (110, 120) in Figure 1. For example, devices indicated without specific drawing symbols as (transmitting/receiving) STA, First STA, Second STA, STA1, STA2, AP, First AP, Second AP, AP1, AP2, (transmit/receive) terminal, (transmit/receive) device, (transmit/receive) apparatus, network, etc., may also refer to the STA (110, 120) in Figure 1. For example, in the following example, the operation of various STAs transmitting and receiving signals (e.g., PPDU) may be performed by the transceivers (113, 123) in Figure 1. Additionally, in the following example, the actions of various STAs generating transmission/reception signals or performing data processing or calculations in advance for transmission/reception signals may be performed by the processor (111, 121) in Figure 1. For example, an example of the operation of generating transmission/reception signals or performing data processing or calculations in advance for transmission/reception signals is: 1) determining/obtaining/configuring/calculating/decoding/encoding the bit information of the subfields (SIG, STF, LTF, Data) included in the PPDU; 2) determining/configuring/acquiring time resources or frequency resources (e.g., subcarrier resources) used for the subfields (SIG, STF, LTF, Data) included in the PPDU; 3) determining/configuring/acquiring specific sequences (e.g., pilot sequences, STF/LTF sequences, extra sequences applied to SIG) used for the subfields (SIG, STF, LTF, Data) included in the PPDU; 4) power control actions and/or power saving actions applied to STA, 5) actions related to determining/obtaining/configuring/calculating/decoding/encoding ACK signals. Additionally, in the following example, various information (e.g., information related to fields/subfields/control fields/parameters/power, etc.) used by various STAs for determining/acquiring/configuring/calculating/decoding/encoding transmission/reception signals may be stored in the memory (112, 122) shown in Figure 1.

The device/STA of sub-drawing (a) of FIG. 1 described above can be modified as shown in sub-drawing (b) of FIG. 1. The STAs (110, 120) of the present specification will now be described based on sub-drawing (b) of FIG. 1.

For example, the transceivers (113, 123) illustrated in sub-drawing (b) of FIG. 1 can perform the same functions as the transceivers illustrated in sub-drawing (a) of FIG. 1 described above. For example, the processing chip (114, 124) illustrated in sub-drawing (b) of FIG. 1 may include a processor (111, 121) and a memory (112, 122). The processor (111, 121) and the memory (112, 122) illustrated in sub-drawing (b) of FIG. 1 may perform the same functions as the processor (111, 121) and the memory (112, 122) illustrated in sub-drawing (a) of FIG. 1 described above.

The mobile terminal, wireless device, Wireless Transmit/Receive Unit (WTRU), User Equipment (UE), Mobile Station (MS), Mobile Subscriber Unit, user, user STA, network, Base Station, Node-B, Access Point (AP), repeater, router, relay, receiving device, transmitting device, receiving STA, transmitting STA, receiving Device, transmitting Device, receiving Apparatus, and/or transmitting Apparatus described below may refer to the STA (110, 120) illustrated in the sub-drawings (a)/(b) of FIG. 1, or may refer to the processing chip (114, 124) illustrated in the sub-drawing (b) of FIG. 1. That is, the technical feature of the present specification may be performed in the STA (110, 120) illustrated in the sub-drawings (a)/(b) of FIG. 1, or may be performed only in the processing chip (114, 124) illustrated in the sub-drawings (b) of FIG. 1. For example, the technical feature that the transmitting STA transmits a control signal may be understood as a technical feature that the control signal generated in the processor (111, 121) illustrated in the sub-drawings (a)/(b) of FIG. 1 is transmitted through the transceiver (113, 123) illustrated in the sub-drawings (a)/(b) of FIG. 1. Alternatively, the technical feature that the transmitting STA transmits a control signal may be understood as a technical feature that the control signal to be transmitted to the transceiver (113, 123) is generated in the processing chip (114, 124) illustrated in the sub-drawings (b) of FIG. 1.

For example, the technical feature of a receiving STA receiving a control signal can be understood as a technical feature of a control signal being received by a transceiver (113, 123) illustrated in sub-drawing (a) of FIG. 1. Alternatively, the technical feature of a receiving STA receiving a control signal can be understood as a technical feature of a control signal received by a transceiver (113, 123) illustrated in sub-drawing (a) of FIG. 1 being acquired by a processor (111, 121) illustrated in sub-drawing (a) of FIG. 1. Alternatively, the technical feature of a receiving STA receiving a control signal can be understood as a technical feature of a control signal received by a transceiver (113, 123) illustrated in sub-drawing (b) of FIG. 1 being acquired by a processing chip (114, 124) illustrated in sub-drawing (b) of FIG. 1.

Referring to sub-drawing (b) of FIG. 1, software code (115, 125) may be included in the memory (112, 122). The software code (115, 125) may include instructions that control the operation of the processor (111, 121). The software code (115, 125) may be included in various programming languages.

The processor (111, 121) or processing chip (114, 124) illustrated in FIG. 1 may include an application-specific integrated circuit (ASIC), another chipset, logic circuit, and/or data processing device. The processor may be an application processor (AP). For example, the processor (111, 121) or processing chip (114, 124) illustrated in FIG. 1 may include at least one of a digital signal processor (DSP), a central processing unit (CPU), a graphics processing unit (GPU), and a modem (modulator and demodulator). For example, the processors (111, 121) or processing chips (114, 124) illustrated in FIG. 1 may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or an enhanced processor thereof.

In the present specification, "uplink" may refer to a link for communication from a non-AP STA to an AP STA, and uplink PPDUs/packets/signals, etc. may be transmitted via the uplink. Furthermore, in the present specification, "downlink" may refer to a link for communication from an AP STA to a non-AP STA, and downlink PPDUs/packets/signals, etc. may be transmitted via the downlink.

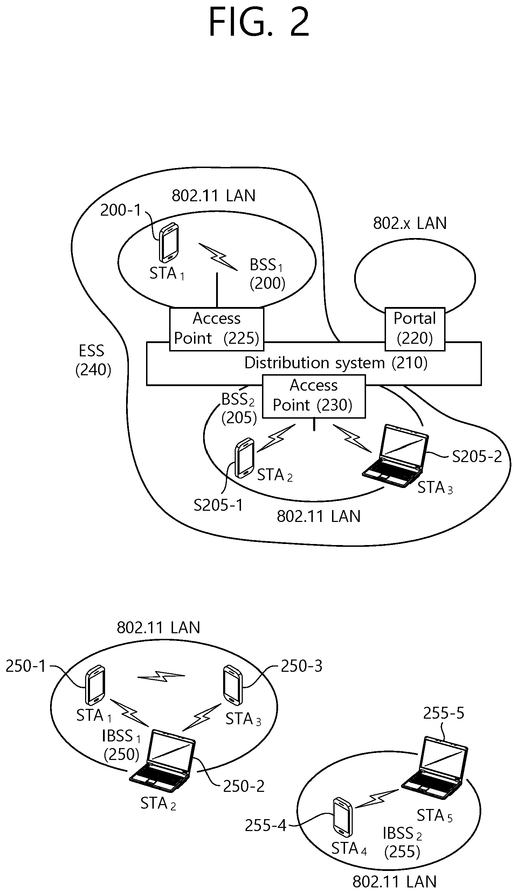

Figure 2 is a conceptual diagram illustrating the structure of a wireless local area network (WLAN).

The top of Figure 2 illustrates the structure of an infrastructure BSS (basic service set) of the Institute of Electrical and Electronic Engineers (IEEE) 802.11 standard.

Referring to the top of Figure 2, the wireless LAN system may include one or more infrastructure BSSs (200, 205) (hereinafter referred to as BSS). A BSS (200, 205) is a set of APs (access points, 225) and STAs (stations, 200-1) that have successfully synchronized and can communicate with each other; it does not refer to a specific area. A BSS (205) may include one or more connectable STAs (205-1, 205-2) connected to a single AP (230).

A BSS may include at least one STA, an AP (225, 230) that provides a distribution service, and a distribution system (DS, 210) that connects multiple APs.

A distributed system (210) can connect multiple BSSs (200, 205) to implement an extended service set (ESS) 240. An ESS (240) can be used as a term to indicate a network formed by connecting one or more APs through the distributed system (210). APs included in a single ESS (240) can have the same SSID (service set identifier).

A portal (220) can serve as a bridge, connecting a wireless LAN network (IEEE 802.11) to another network (e.g., 802.X).

In a BSS, such as the upper portion of FIG. 2, a network between APs (225, 230) and a network between APs (225, 230) and STAs (200-1, 205-1, 205-2) can be implemented. However, it may also be possible to establish a network and perform communication between STAs without an AP (225, 230). A network that establishes a network and performs communication between STAs without an AP (225, 230) is defined as an ad-hoc network or an independent basic service set (IBSS).

The bottom of Figure 2 is a conceptual diagram illustrating an IBSS.

Referring to the bottom of Figure 2, an IBSS is a BSS that operates in ad-hoc mode. Since an IBSS does not include an AP, there is no centralized management entity. That is, in the IBSS, STAs (250-1, 250-2, 250-3, 255-4, 255-5) are managed in a distributed manner. In IBSS, all STAs (250-1, 250-2, 250-3, 255-4, 255-5) can be mobile STAs, and access to distributed systems is not permitted, forming a self-contained network.

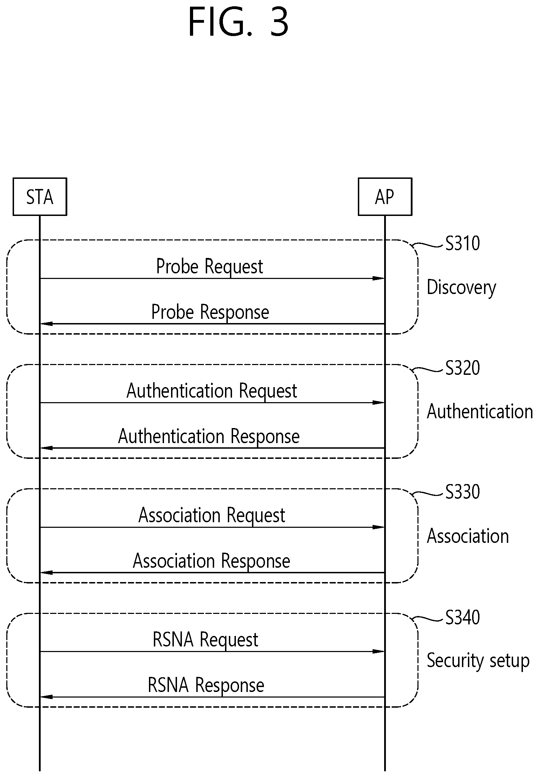

Figure 3 is a diagram illustrating a typical link setup process.

In the illustrated step S310, a STA may perform a network discovery operation. This network discovery operation may include scanning. That is, for a STA to access a network, it must find a network it can join. Before joining a wireless network, a STA must identify compatible networks. The process of identifying networks in a specific area is called scanning. Scanning methods include active scanning and passive scanning.

Figure 3 illustrates a network discovery operation that includes an active scanning process as an example. In active scanning, a STA performing scanning transmits a probe request frame to discover nearby APs while moving through channels and awaits a response. The responder transmits a probe response frame to the STA that transmitted the probe request frame in response to the probe request frame. Here, the responder may be the STA that last transmitted a beacon frame in the BSS of the channel being scanned. In a BSS, the AP transmits the beacon frame, making it the responder. In an IBSS, STAs within the IBSS take turns transmitting beacon frames, so the responder is not fixed. For example, a STA that transmits a probe request frame on channel 1 and receives a probe response frame on channel 1 may store the BSS-related information contained in the received probe response frame and move to the next channel (e.g., channel 2) to perform scanning in the same manner (e.g., transmitting and receiving probe requests and responses on channel 2).

Although not shown in the example of Figure 3, the scanning operation can also be performed passively. A STA performing scanning based on passive scanning may wait for a beacon frame while moving between channels. A beacon frame, a management frame in IEEE 802.11, announces the presence of a wireless network and is periodically transmitted to scanning STAs to discover and join the network. In the BSS, the AP periodically transmits beacon frames, while in the IBSS, STAs within the IBSS take turns transmitting beacon frames. When a scanning STA receives a beacon frame, it stores the BSS information contained in the beacon frame and moves to a different channel, recording the beacon frame information on each channel. Upon receiving a beacon frame, the STA stores the BSS-related information contained in the received beacon frame and moves to the next channel, performing scanning on the next channel using the same method.

A STA that discovers a network can perform an authentication process in step S320. This authentication process can be referred to as the first authentication process to clearly distinguish it from the security setup operation of step S340, described below. The authentication process of S320 may include a process in which the STA transmits an authentication request frame to the AP, and the AP transmits an authentication response frame to the STA in response. The authentication frame used for the authentication request/response corresponds to a management frame.

The authentication frame may include information such as an authentication algorithm number, an authentication transaction sequence number, a status code, a challenge text, a Robust Security Network (RSN), and a Finite Cyclic Group (FCG).

The STA may transmit the authentication request frame to the AP. The AP may determine whether to grant authentication to the STA based on the information contained in the received authentication request frame. The AP may provide the STA with the result of the authentication process via an authentication response frame.

A successfully authenticated STA may perform the connection process based on step S330. The association process involves the STA sending an association request frame to the AP, and the AP responding by sending an association response frame to the STA. For example, the association request frame may include information related to various capabilities, such as a beacon listen interval, a service set identifier (SSID), supported rates, supported channels, RSN, mobility domain, supported operating classes, a Traffic Indication Map Broadcast request, and interworking service capabilities. For example, the association response frame may include information related to various capabilities, status codes, Association ID (AID), supported rates, Enhanced Distributed Channel Access (EDCA) parameter sets, Received Channel Power Indicator (RCPI), Received Signal to Noise Indicator (RSNI), mobility domains, timeout intervals (association comeback times), overlapping BSS scan parameters, TIM broadcast responses, QoS maps, etc.

Subsequently, in step S340, the STA may perform a security setup process. The security setup process in step S340 may include, for example, a process of setting up a private key through four-way handshaking using an Extensible Authentication Protocol over LAN (EAPOL) frame.

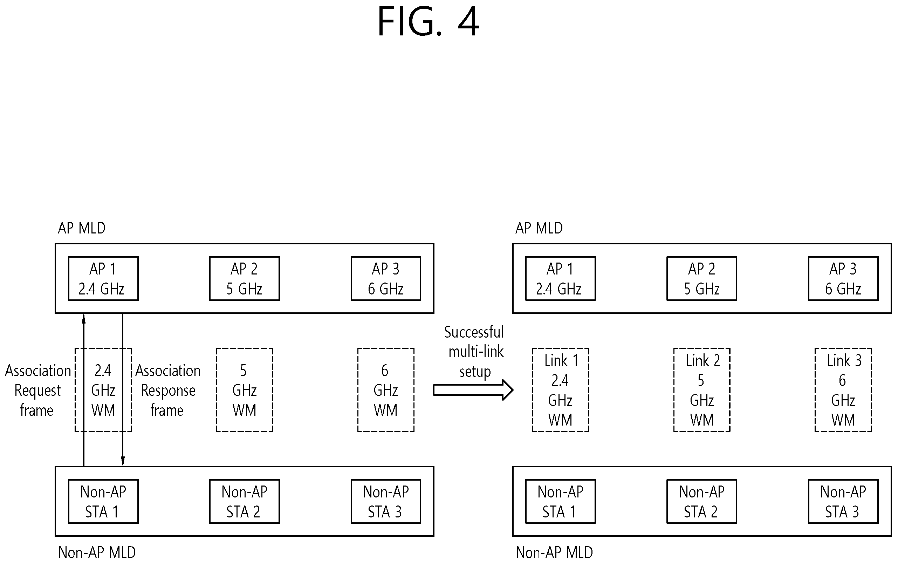

Figure 4 illustrates an embodiment of a multi-link (ML).

As illustrated in Figure 4, multiple multi-link devices (MLDs) can communicate via a multi-link. The MLDs can be categorized into AP MLDs, which include multiple AP STAs, and non-AP MLDs, which include multiple non-AP STAs. Specifically, the AP MLD may include affiliated APs (e.g., AP STAs), and the non-AP MLD may include affiliated STAs (e.g., non-AP STAs, or user-STAs).

The multi-link may include a first link and a second link, and different channels/subchannels/frequency resources may be allocated to the first and second links. The first and second multi-links may be identified using a 4-bit (or other n-bit) link ID. The first and second links may be configured in the same 2.4 GHz, 5 GHz, or 6 GHz band. Alternatively, the first and second links may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link, in which AP1 and non-AP1 operate, may be defined as a channel/subchannel/frequency resource within the 2.4 GHz band. Furthermore, in the example of FIG. 4, the second link, in which AP2 and non-AP2 operate, may be defined as a channel/subchannel/frequency resource within the 5 GHz band. Additionally, in the example of FIG. 4, the third link where AP3 and non-AP3 operate can be defined as a channel/subchannel/frequency resource within the 6 GHz band.

In the example of FIG. 4, AP1 can initiate a multilink setup procedure (ML setup procedure) by transmitting an Association Request frame to non-AP STA1. In the example of FIG. 4, non-AP STA1 can transmit an Association Response frame in response to the Association Request frame. Each AP (e.g., AP1/2/3) depicted in FIG. 4 may be identical to the APs depicted in FIG. 1 and/or FIG. 2, and each non-AP (e.g., non-AP1/2/3) depicted in FIG. 4 may be identical to the STAs (e.g., user STAs or non-AP STAs) depicted in FIG. 1 and/or FIG. 2.

The specific features of the present specification are not limited to the specific features depicted in FIG. 4. That is, the number of links can be defined in various ways, and multiple links can be defined in various ways within at least one band.

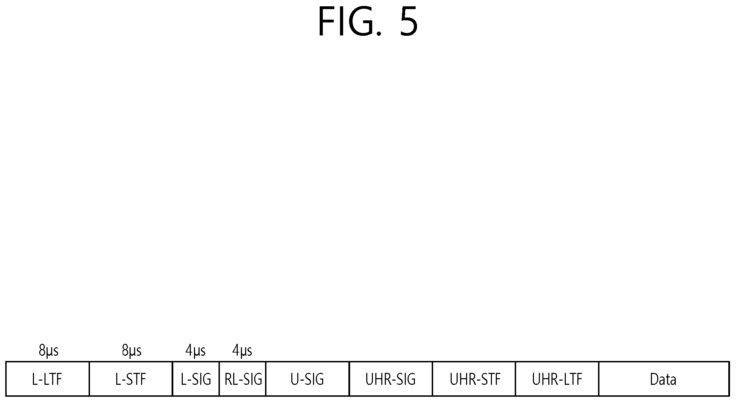

Figure 5 illustrates a PPDU (physical protocol data unit or physical layer (PHY) protocol data unit) transmitted/received by a STA of the present specification.

A STA (e.g., an AP STA, a non-AP STA, an AP MLD, or a non-AP MLD) of the present specification can transmit and/or receive the PPDU of Figure 5. The PPDU described herein may have, for example, the structure of Figure 5. Furthermore, the PPDU described herein, an Ultra High Reliability (UHR) PPDU, may be referred to by various names, such as a transmission PPDU, a reception PPDU, a first type PPDU, or an Nth type PPDU. The PPDU described herein may be used in a WLAN system defined according to IEEE 802.11bn and/or a next-generation WLAN system that enhances IEEE 802.11bn.

The PPDU of Figure 5 may relate to various PPDU types used in a UHR system. For example, the example of FIG. 5 can be used for at least one of single-user (SU) mode/type/transmission, multi-user (MU) mode/type/transmission, and null data packet (NDP) mode/type/transmission related to channel sounding. For example, if the example of FIG. 5 relates to NDP, the illustrated Data field may be omitted. If the PPDU of FIG. 5 is used for Trigger-based (TB) mode, the UHR-SIG of FIG. 5 may be omitted. In other words, a STA that has received a Trigger frame for UL-MU (Uplink-MU) communication may transmit a PPDU with the UHR-SIG omitted in the example of FIG. 5.

In FIG. 5, L-STF or UHR-LTF may be referred to as a preamble or physical preamble, and may be generated/transmitted/received/acquired/decoded in the physical layer (included in the transmitting/receiving STA).

Each block illustrated in FIG. 5 may be referred to as a field/subfield/signal, etc. The names of these fields/subfields/signals may be, as illustrated in FIG. 5, a legacy short training field (L-STF), a legacy long training field (L-LTF), a legacy signal (L-SIG), a repeated L-SIG (RL-SIG), Universal Signal (U-SIG), UHR-signal (UHR-SIG), etc.

The subcarrier spacing of the L-STF, L-LTF, L-SIG, RL-SIG, U-SIG, and UHR-SIG fields in FIG. 5 may be set to 312.5 kHz, and the subcarrier spacing of the UHR-STF, UHR-LTF, and Data fields may be set to 78.125 kHz. That is, the tone indices (or subcarrier indices) of the L-STF, L-LTF, L-SIG, RL-SIG, U-SIG, and UHR-SIG fields may be expressed in units of 312.5 kHz, and the tone indices (or subcarrier indices) of the UHR-STF, UHR-LTF, and Data fields may be expressed in units of 78.125 kHz.

In the PPDU in FIG. 5, L-LTF and L-STF may be identical to conventional fields (e.g., non-HT LTF and non-HT STF defined in conventional WLAN standards).

The L-SIG field of FIG. 5 may include, for example, 24 bits of bit information. For example, the 24 bits of information may include a 4 bit Rate field, a 1 bit Reserved bit, a 12 bit Length field, a 1 bit Parity bit, and a 6 bit Tail bit. For example, the 12 bit Length field may include information about the length or time duration of the PPDU. For example, the value of the 12 bit Length field may be determined based on the type of the PPDU. For example, if the PPDU is a non-HT (non-High Throughput), HT (High Throughput), VHT (Very High Throughput) PPDU, or an EHT (extremely high throughput) PPDU or UHR PPDU, the value of the Length field may be determined as a multiple of 3. For example, if the PPDU is a HE PPDU, the value of the Length field may be determined as "a multiple of 3 + 1" or "a multiple of 3 + 2". In other words, for non-HT, HT, VHT PPDUs, EHT PPDUs, and UHR PPDUs, the Length field value can be determined as a multiple of 3. For HE (High Efficiency) PPDUs, the Length field value can be determined as "a multiple of 3 + 1" or "a multiple of 3 + 2." In other words, the Length field in a UHR PPDU is set to a value satisfying the condition that the remainder is zero when LENGTH is divided by 3.

For example, a (non-AP and AP) STA can apply BCC encoding based on a code rate of 1/2 to the 24-bit information in the L-SIG field. The transmitting STA can then acquire 48 BCC encoding bits. BPSK modulation can be applied to the 48 encoding bits, generating 48 BPSK symbols. The transmitting STA can map 48 BPSK symbols to positions other than the pilot subcarriers {subcarrier indices -21, -7, +7, +21} and the DC subcarrier {subcarrier index 0}. Consequently, the 48 BPSK symbols can be mapped to subcarrier indices -26 to -22, -20 to -8, -6 to -1, +1 to +6, +8 to +20, and +22 to +26. The transmitting STA can additionally map signals {-1, -1, -1, 1} to subcarrier indices {-28, -27, +27, +28}. These signals can be used for channel estimation for the frequency domain corresponding to {-28, -27, +27, +28}.

For example, (non-AP and AP) STAs can generate RL-SIGs that are generated identically to L-SIGs. BPSK modulation can be applied to RL-SIG. The receiving (non-AP and AP) STA can determine whether the received PPDU is a HE PPDU, EHT PPDU, or UHR PPDU based on the presence of RL-SIG. In other words, the receiving (non-AP and AP) STA can determine whether the received PPDU is a HE PPDU, EHT PPDU, or UHR PPDU if RL-SIG is present. In other words, the receiving (non-AP and AP) STA can determine whether the received PPDU is a non-HT PPDU, HT PPDU, or VHT PPDU if RL-SIG is not present. In other words, the RL-SIG field is a repeat of the L-SIG field and is used to differentiate a UHR PPDU from a non-HT PPDU, HT PPDU, and VHT PPDU.

A Universal Signal-Integrated (U-SIG) may be inserted after the RL-SIG in Figure 5. The U-SIG may be referred to by various names, such as the first SIG field, the first SIG, the first type SIG, the control signal, the control signal field, the first (type) control signal, the common control field, and the common control signal.

The U-SIG may contain N bits of information and may include information for identifying the type of the EHT PPDU. For example, the U-SIG may be composed based on two symbols (e.g., two consecutive/contiguous OFDM symbols). Each symbol for the U-SIG (e.g., the OFDM symbol) may have a duration of 4 µs. Each symbol of the U-SIG may be used to transmit 26 bits of information. For example, each symbol of the U-SIG may be transmitted and received based on 52 data tones and 4 pilot tones.

For example, A bit information (e.g., 52 uncoded bits) can be transmitted through U-SIG, and the first symbol of U-SIG can transmit the first X bits of information (e.g., 26 uncoded bits) out of the total A bit information, and the second symbol of U-SIG can transmit the remaining Y bits of information (e.g., 26 uncoded bits) out of the total A bit information. For example, the transmitting STA can obtain 26 uncoded bits included in each U-SIG symbol. The transmitting STA can perform convolutional encoding (e.g., BCC encoding) based on a rate of R=1/2 to generate 52 coded bits, and perform interleaving on the 52 coded bits. The transmitting STA can perform BPSK modulation on the interleaved 52 BPSK symbols to generate 52 BPSK symbols allocated to each U-SIG symbol. A single U-SIG symbol can be transmitted based on 56 tones (subcarriers) ranging from subcarrier index - 28 to subcarrier index +28, excluding DC index 0. The 52 BPSK symbols generated by the transmitting STA can be transmitted based on the remaining tones (subcarriers) excluding the pilot tones -21, -7, +7, and +21.

For example, the A-bit information (e.g., 52 uncoded bits) transmitted by the U-SIG can include a CRC field (e.g., a 4-bit field) and a tail field (e.g., a 6-bit field). The CRC field and tail field can be transmitted via the second symbol of the U-SIG. The CRC field can be generated based on the 26 bits allocated to the first symbol of the U-SIG and the remaining 16 bits within the second symbol, excluding the CRC/tail field, and can be generated based on a conventional CRC calculation algorithm. Additionally, the tail field can be used to terminate the trellis of the convolutional decoder and can be set to "000000," for example.

The A-bit information (e.g., 52 uncoded bits) transmitted by the U-SIG (or U-SIG field) can be divided into version-independent bits and version-dependent bits. For example, the size of the version-independent bits can be fixed or variable. For example, the version-independent bits can be assigned only to the first symbol of the U-SIG, or the version-independent bits can be assigned to both the first and second symbols of the U-SIG. For example, the version-independent bits and version-dependent bits can be referred to by various names, such as the first control bit and the second control bit.

For example, the version-independent bits of the U-SIG can include a 3-bit PHY version identifier. For example, a 3-bit PHY version identifier may include information related to the PHY version of a transmitted/received PPDU. For example, a first value (e.g., a value of 000) of the 3-bit PHY version identifier may indicate that the transmitted/received PPDU is an EHT PPDU. Additionally, a second value (e.g., a value of 001) of the 3-bit PHY version identifier may indicate that the transmitted/received PPDU is a UHR PPDU.

In other words, when an (AP/non-AP) STA transmits an EHT PPDU, it may set the 3-bit PHY version identifier to the first value. In other words, a receiving (AP/non-AP) STA may determine that the received PPDU is an EHT PPDU based on a PHY version identifier having the first value, and may determine that the received PPDU is a UHR PPDU based on a PHY version identifier having the second value.

For example, the version-independent bits of U-SIG may include a 1-bit UL/DL flag field. The first value of the 1-bit UL/DL flag field relates to UL communication, and the second value of the UL/DL flag field relates to DL communication.

For example, the version-independent bits of the U-SIG may include information about the length of the TXOP and information about the BSS color ID.

For example, if the UHR PPDU is classified into various types (e.g., a type related to SU transmission (performed based on UL or DL), a type related to DL transmission, a type related to NDP transmission, a type related to DL non-MU-MIMO, a type related to DL MU-MIMO, a type related to Multi-AP operation, a type related to CBF (Coordinated beamforming), SR (Spatial Reuse), a type related to C-OFDMA (Coordinated OFDMA), a type related to C-TDMA (Coordinated TDMA)), information about the type of the EHT PPDU (e.g., 2-bit or 3-bit information) may be included in the version-dependent bits of the U-SIG.

For example, U-SIG may include 1) a bandwidth field including information about bandwidth, 2) a field including information about the Modulation and Coding Scheme (MCS) technique applied to UHR-SIG, 3) an indication field including information about whether dual subcarrier modulation (DCM) technique is applied to UHR-SIG, 4) a field including information about the number of symbols used for UHR-SIG, 5) a field including information about whether UHR-SIG is generated across the entire band, 6) a field including information about the type of UHR-LTF/STF, and 7) a field indicating the length of UHR-LTF and the CP length.

Preamble puncturing may be applied to the PPDU of FIG. 5. Preamble puncturing means applying puncturing to a portion of the entire band of the PPDU (e.g., the secondary 20 MHz band). For example, when an 80 MHz PPDU is transmitted, the STA can apply puncturing to the secondary 20 MHz band within the 80 MHz band and transmit the PPDU only through the primary 20 MHz band and the secondary 40 MHz band.

For example, the preamble puncturing pattern can be preset. For example, if the first puncturing pattern is applied, puncturing can be applied only to the secondary 20 MHz band within the 80 MHz band. For example, if the second puncturing pattern is applied, puncturing can be applied only to one of the two secondary 20 MHz bands included in the secondary 40 MHz band within the 80 MHz band. For example, if the third puncturing pattern is applied, puncturing can be applied only to the secondary 20 MHz band included in the primary 80 MHz band within the 160 MHz band (or 80+80 MHz band). For example, when the fourth puncturing pattern is applied, puncturing may be applied to at least one 20 MHz channel not included in the primary 40 MHz band, while the primary 40 MHz band is present within the 160 MHz band (or the 80+80 MHz band).

Information related to preamble puncturing applied to a PPDU may be included in the U-SIG and/or UHR-SIG. For example, the first field of the U-SIG may include information related to the contiguous bandwidth of the PPDU, and the second field of the U-SIG may include information related to preamble puncturing applied to the PPDU.

For example, the U-SIG and UHR-SIG may include information related to preamble puncturing based on the following method. If the bandwidth of the PPDU exceeds 80 MHz, the U-SIG may be configured individually in 80 MHz units. For example, if the bandwidth of a PPDU is 160 MHz, the PPDU may include a first U-SIG for a first 80 MHz band and a second U-SIG for a second 80 MHz band. In this case, a first field of the first U-SIG may include information about the 160 MHz bandwidth, and a second field of the first U-SIG may include information about preamble puncturing applied to the first 80 MHz band (e.g., information about a preamble puncturing pattern). In addition, a first field of the second U-SIG may include information about the 160 MHz bandwidth, and a second field of the second U-SIG may include information about preamble puncturing applied to the second 80 MHz band (e.g., information about a preamble puncturing pattern). Meanwhile, the UHR-SIG contiguous to the first U-SIG may include information about preamble puncturing applied to the second 80 MHz band (e.g., information about a preamble puncturing pattern), and the UHR-SIG contiguous to the second U-SIG may include information about preamble puncturing applied to the first 80 MHz band (e.g., information about a preamble puncturing pattern).

Additionally or alternatively, the U-SIG and UHR-SIG may include information related to preamble puncturing based on the following methods. The U-SIG may include information related to preamble puncturing for all bands (e.g., information related to the preamble puncturing pattern). That is, the UHR-SIG does not include information related to preamble puncturing, and only the U-SIG may include information related to preamble puncturing (e.g., information related to the preamble puncturing pattern).

The U-SIG may be configured in 20 MHz units. For example, if an 80 MHz PPDU is configured, the U-SIG may be duplicated. That is, four identical U-SIGs may be included within the 80 MHz PPDU. PPDUs exceeding the 80 MHz bandwidth may include different U-SIGs.

The UHR-SIG of FIG. 5 may include control information for a receiving STA. The UHR-SIG may be transmitted over at least one symbol, each symbol having a length of 4 µs. Information related to the number of symbols used for the UHR-SIG may be included in the U-SIG.

The UHR-SIG provides additional signals to the U-SIG field to enable the STA to interpret/decode the UHR PPDU. The UHR-SIG field may include U-SIG overflow bits common to all users. The UHR-SIG field also includes resource allocation information, allowing the STA to look up resources used in fields including the data field, UHR-STF, and UHR-LTF (e.g., UHR modulated fields of a UHR PPDU).

The frequency resources of the UHR-LTF, UHR-STF, and data fields illustrated in Figure 5 can be determined based on resource units (RUs) defined by multiple subcarriers/tones. That is, the UHR-LTF, UHR-STF, and data fields of the present specification can be transmitted/received via resource units (RUs) defined by multiple subcarriers/tones.

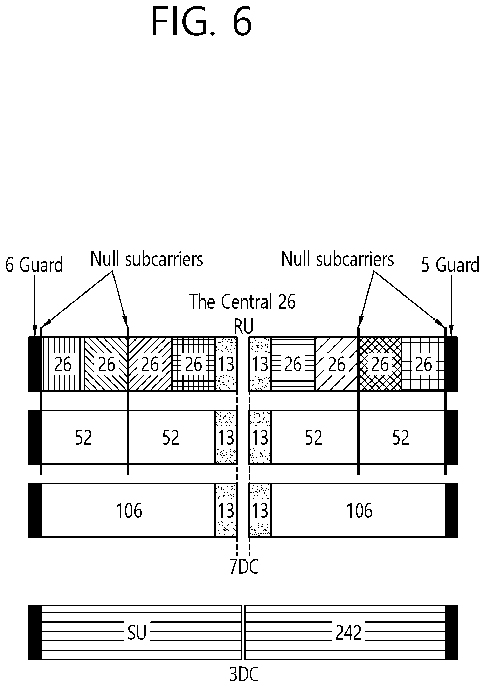

Figure 6 is a diagram illustrating the layout of resource units (RUs) used for a 20MHz PPDU. That is, the UHR-LTF, UHR-STF, and/or data fields included in a 20MHz PPDU can be transmitted/received via at least one of the various RUs defined in Figure 6.

As illustrated at the top of Figure 6, 26 units (e.g., units corresponding to 26 tones) can be arranged. In the leftmost band of the 20 MHz band, six tones can be used as a guard band, and in the rightmost band of the 20 MHz band, five tones can be used as a guard band. Furthermore, seven DC tones can be inserted into the center band (i.e., the DC band), and 26 units, corresponding to 13 tones each, can exist on the left and right sides of the DC band. Furthermore, 26, 52, and 106 units can be allocated to other bands. Each unit can be assigned to a receiving station, i.e., a user.

Meanwhile, the RU arrangement of Figure 6 can be utilized not only for multiple users (MUs) but also for single users (SUs). In this case, as shown at the bottom of Figure 6, a single 242-unit can be used, in which case three DC tones can be inserted.

In the example of Fig. 6, RUs of various sizes, such as 26-RU, 52-RU, 106-RU, and 242-RU, are proposed. Since the specific sizes of these RUs can be expanded or increased, the present embodiment is not limited to the specific sizes of each RU (e.g., the number of corresponding tones). In the present specification, N-RU may be represented as N-tone RU, etc. For example, 26-RU may be represented as 26-tone RU.

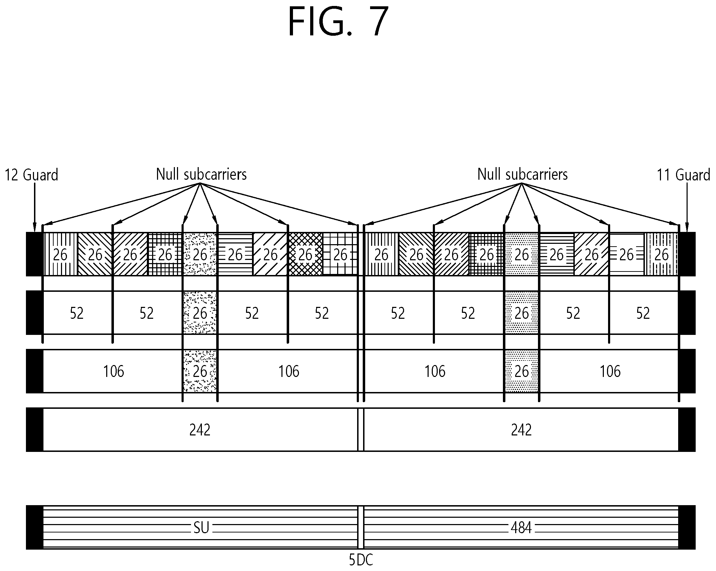

Figure 7 is a diagram illustrating the layout of resource units (RUs) used for a 40MHz PPDU.

Similar to the example in Figure 6, which used RUs of various sizes, the example in Figure 7 can also use RUs of 26, 52, 106, 242, and 484 RUs. Furthermore, five DC tones can be inserted at the center frequency, 12 tones can be used as guard bands in the leftmost band of the 40MHz band, and 11 tones can be used as guard bands in the rightmost band of the 40MHz band.

Also, as illustrated, a 484-RU can be used for a single user. Similarly to the example in Figure 6, the specific number of RUs can be varied.

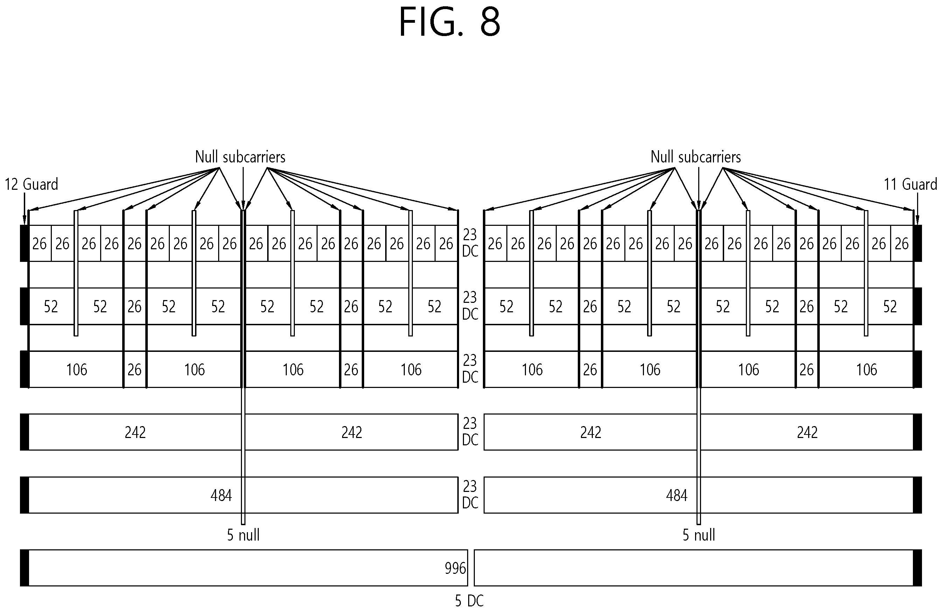

Figure 8 is a diagram illustrating the layout of resource units (RUs) used for an 80MHz PPDU. The arrangement of resource units (RUs) used in the present specification may vary. For example, the arrangement of resource units (RUs) used in the 80 MHz band may vary.

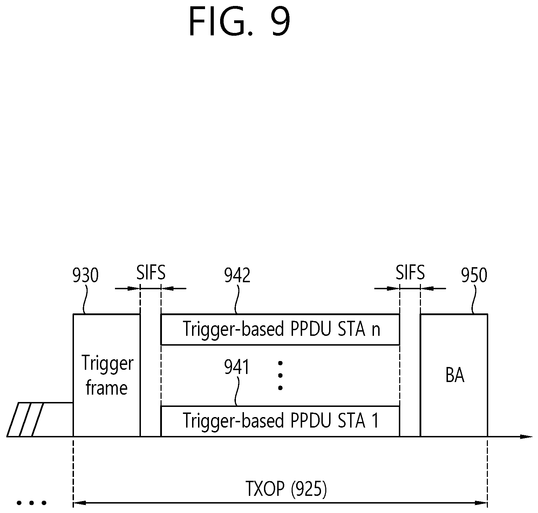

Figure 9 illustrates the operation according to UL-MU. As illustrated, a transmitting STA (e.g., an AP) may acquire a TXOP (925) by performing channel access through contending (e.g., backoff operation) and transmit a Trigger frame (930). That is, the transmitting STA (e.g., an AP) may transmit a PPDU including the Trigger frame (930). Upon receiving the PPDU including the Trigger frame, a TB (trigger-based) PPDU is transmitted after a delay equal to SIFS.

TB PPDUs (941, 942) are transmitted at the same time and may be transmitted from multiple STAs (e.g., user STAs) whose AIDs are indicated in the Trigger frame (930). The ACK frame (950) for the TB PPDU can be implemented in various forms. For example, the ACK frame (950) for the TB PPDU can be implemented in the form of a BA (block ACK).

In FIG. 9, transmission(s) of the Trigger Frame (930), TB PPDUs (941, 942), and/or the ACK frame (950) can be performed within the TXOP (925).

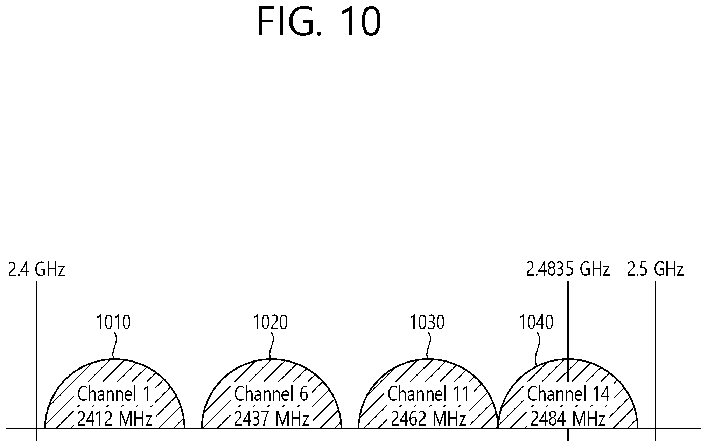

FIG. 10 illustrates an example of channels used/supported/defined within the 2.4 GHz band.

The 2.4 GHz band may also be referred to by other names, such as the first band (band). Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz channel within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. Channel indices may be referred to by various names, such as channel numbers. The specific numerical values of the channel indices and center frequencies may vary.

Figure 10 illustrates four channels within the 2.4 GHz band. The illustrated first frequency range (1010) through fourth frequency range (1040) may each include one channel. For example, the first frequency domain (1010) may include channel 1 (a 20 MHz channel having an index of 1). At this time, the center frequency of channel 1 may be set to 2412 MHz. The second frequency domain (1020) may include channel 6. At this time, the center frequency of channel 6 may be set to 2437 MHz. The third frequency domain (1030) may include channel 11. At this time, the center frequency of channel 11 may be set to 2462 MHz. The fourth frequency domain (1040) may include channel 14. At this time, the center frequency of channel 14 may be set to 2484 MHz.

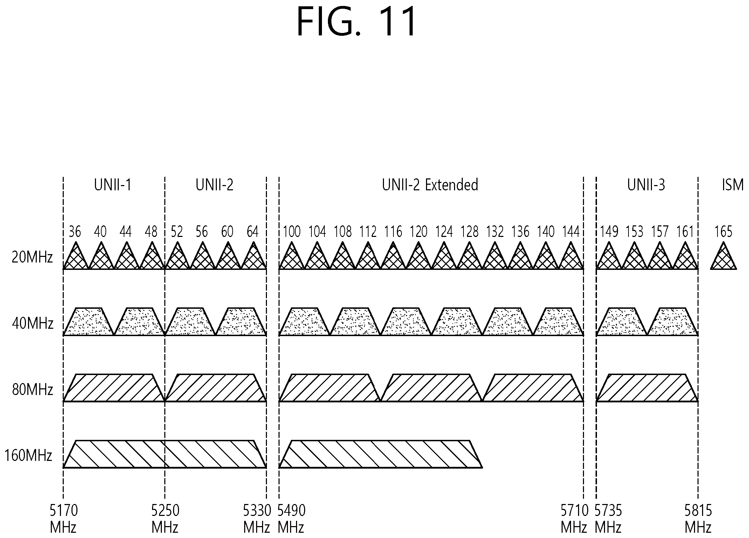

Figure 11 illustrates an example of channels used/supported/defined within the 5 GHz band.

The 5 GHz band may also be referred to as a second band, etc. The 5 GHz band may refer to a frequency range in which channels with a center frequency greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in Figure 11 are subject to change.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2 Extended. UNII-3 may be referred to as UNII-Upper.

Multiple channels can be configured within the 5 GHz band, and the bandwidth of each channel can be variously configured, such as 20 MHz, 40 MHz, 80 MHz, or 160 MHz. For example, the 5170 MHz to 5330 MHz frequency range within UNII-1 and UNII-2 can be divided into eight 20 MHz channels. The 5170 MHz to 5330 MHz frequency range can be divided into four channels via a 40 MHz frequency band. The 5170 MHz to 5330 MHz frequency range can be divided into two channels via an 80 MHz frequency band. Alternatively, the 5170 MHz to 5330 MHz frequency range can be divided into one channel via a 160 MHz frequency band.

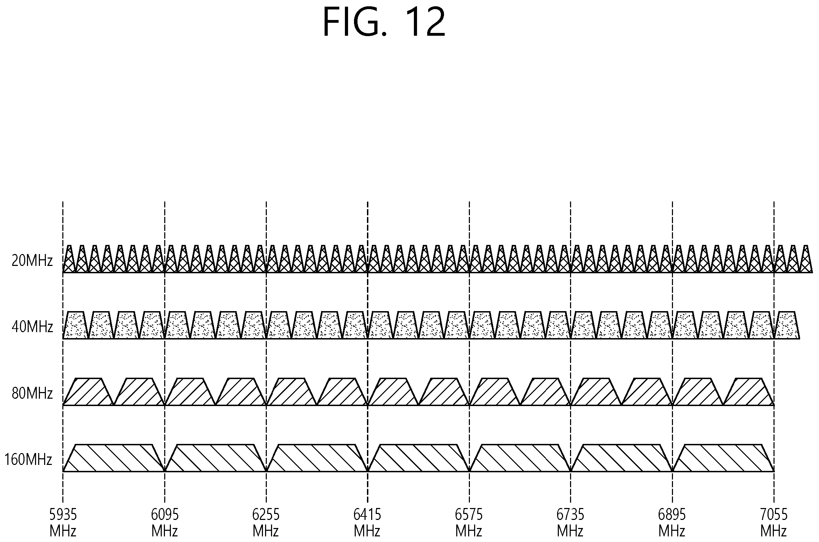

Figure 12 illustrates an example of channels used/supported/defined within the 6 GHz band.

The 6 GHz band may be referred to by other names, such as the third band/band. The 6 GHz band may refer to a frequency range where channels with a center frequency of 5.9 GHz or higher are used, supported, or defined. The specific values shown in Figure 12 may vary.

For example, the 20 MHz channel in Figure 12 may be defined starting from 5.940 GHz. Specifically, the leftmost channel among the 20 MHz channels in Figure 12 may have an index of 1 (or channel index, channel number, etc.) and may be assigned a center frequency of 5.945 GHz. In other words, the center frequency of channel index N may be determined as (5.940 + 0.005*N) GHz.

Accordingly, the indices (or channel numbers) of the 20 MHz channels in Figure 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Additionally, according to the aforementioned (5.940 + 0.005*N) GHz rule, the indices of the 40 MHz channels in Figure 12 can be 3, 11, 19, 27, 35, 43, 51, 59, 67, 75, 83, 91, 99, 107, 115, 123, 131, 139, 147, 155, 163, 171, 179, 187, 195, 203, 211, 219, and 227.

Hereinafter, the structure, type and/or sub-type of the MAC frame are described.

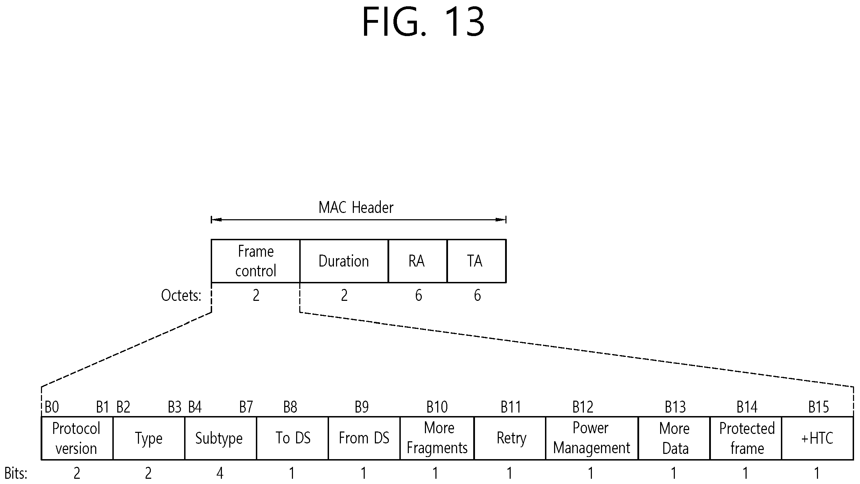

Figure 13 illustrates an example of a MAC frame header. As illustrated, the MAC frame may include a 2-octet frame control field/information, a 2-octet duration field/information, a 6-octet RA (Receiver Address) field/information, and a 6-octet TA (Transmitter Address) field/information. As illustrated in Figure 13, the four fields may be contiguous. The MAC header of Figure 13 may be modified in various ways, with new fields inserted between the four fields illustrated, or at least one of the fields illustrated may be omitted.

The MAC header illustrated in Figure 13 may be positioned at the very beginning of the MAC frame. That is, the MAC frame may include a MAC header as illustrated in Figure 13 and a MAC body field/information contiguous to the MAC header. The MAC frame including the MAC header of Figure 13 is inserted/included in the data field of the PPDU (e.g., UHR PPDU) illustrated in Figure 5.

The MAC frames included in the data field of the PPDU of the present specification can be classified into various types. For example, the MAC frames of the present specification can be classified into control frames, management frames, and data frames.

For example, the management frame includes the Association Request, Association Response, Reassociation Request, Reassociation Response, Probe Request, Probe Response, Beacon, Disassociation, Authentication, and Deauthentication frames/signals defined in conventional WLANs. For the management frame, the type fields (B3 and B2) in FIG. 13 are set to 00. Additionally, the values of the subtype fields (B7, B6, B5, B4) in Figure 13 are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) in Figure 13 are set to 01. Additionally, the values of the subtype fields (B7, B6, B5, B4) in FIG. 13 are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For the data frame, the values of the type fields (B3 and B2) in FIG. 13 are set to 10.

The MAC frames/signals used in the present specification can be identified through the type field/information and subtype field/information described above. For example, a "trigger frame" in the present specification may refer to a MAC frame in which the type bits B3 and B2 in the frame control field of the MAC header are set to 01, while the subtype bits B7, B6, B5, and B4 in the frame control field are set to 0010. The various MAC frames described in the present specification are inserted/included in the data fields of various PPDUs (e.g., HE/VHT/HE/EHT/UHR PPDUs).

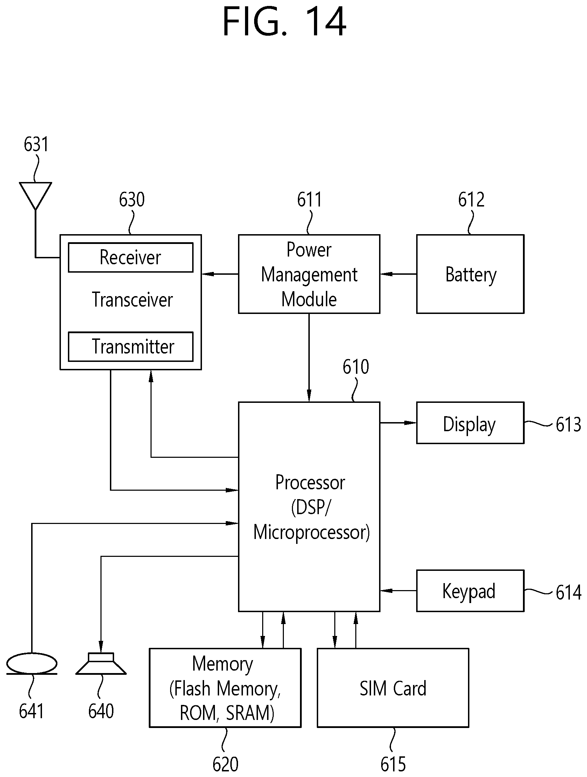

Figure 14 illustrates a modified example of a transmitting device and/or receiving device of the present specification.

The devices (e.g., AP STAs, non-AP STAs) illustrated in Figures 1 to 4 may be modified as illustrated in Figure 14. The transceiver (630) in Figure 14 may be identical to the transceivers (113, 123) in Figure 1. The transceiver (630) of FIG. 14 may include a receiver and a transmitter.

The processor (610) of FIG. 14 may be identical to the processors (111, 121) of FIG. 1. Alternatively, the processor (610) of FIG. 14 may be identical to the processing chip (114, 124) of FIG. 1.

The memory (150) of FIG. 14 may be identical to the memory (112, 122) of FIG. 1. Alternatively, the memory (150) of FIG. 14 may be a separate external memory different from the memory (112, 122) of FIG. 1.

Referring to FIG. 14, the power management module (611) manages power for the processor (610) and/or the transceiver (630). The battery (612) supplies power to the power management module (611). The display (613) outputs the results processed by the processor (610). The keypad (614) receives input to be used by the processor (610). The keypad (614) may be displayed on the display (613). The SIM card (615) may be an integrated circuit used to securely store an international mobile subscriber identity (IMSI) and associated keys, which are used to identify and authenticate subscribers in mobile devices such as mobile phones and computers.

Referring to FIG. 14, the speaker (640) may output sound-related results processed by the processor (610). The microphone (641) may receive sound-related input to be used by the processor (610).

The various technical features of the present specification may operate based on a relay station. A relay STA (station) refers to a device that receives a PPDU (e.g., the above-described HT/VHT/HE/EHT/UHR-PPDU) from a first STA (e.g., an AP STA) and relays the received PPDU to a second STA (e.g., a non-AP STA). In the present specification, the relay function/operation/procedure/transmission performed by the relay STA may be implemented in various ways. For example, a relay STA may receive a first PPDU from the first STA and decode a portion of the received first PPDU. For example, a relay STA may decode a PHY preamble (e.g., L-SIG, U-SIG, EHT-SIG, etc.) included in the first PPDU, and may decode a portion of a MAC frame (e.g., a MAC header) included in a data field of the first PPDU. Through this, a relay STA can acquire a frame body of the MAC frame of the first PPDU, and without performing additional decoding on the acquired frame body of the MAC frame, can relay the frame body of the MAC frame to the second STA. That is, a relay STA can encode/generate/configure a second PPDU based on the body of the MAC frame, and can transmit the second PPDU to the second STA. As a result, the first PPDU and the second PPDU may include the same payload or MAC frame body. For example, the PHY preamble and/or MAC header of the first PPDU received by the relay STA may be the same as or different from the PHY preamble and/or MAC header of the second PPDU transmitted by the relay STA. For example, the relay STA may not decode the remaining MAC frame (i.e., frame body) excluding the MAC header of the first PPDU, or may decode only a portion thereof.

In the present specification, a relay STA may be implemented in various ways.

First, the relay STA of the present specification may be implemented in a manner that includes a relay-STA and a relay-AP. That is, a relay STA may include a relay STA that communicates with a root AP, and at the same time may also include a relay AP that communicates with a non-AP. In this case, an upper BSS may be defined between the root AP and the relay STA, and a lower BSS may be defined between the relay AP and the non-AP. Within the relay STA, a relay function may be implemented between the relay STA and the relay AP.

Second, the relay STA of the present specification may be a terminal/device that operates as a non-AP STA (i.e., a user STA). That is, the relay STA of the present specification may belong to a BSS defined/configured by an AP STA without newly defining/configuring a lower BSS by itself. An AP STA may assign an ID (e.g., an AID) to the relay STA in the same manner as a conventional non-AP STA (i.e., a user STA). That is, a relay STA is identified as a typical non-AP STA (i.e., a user STA), and can additionally support the above-described relay function/operation/procedure/transmission. That is, a relay STA can receive a first DL PPDU from an AP-STA, acquire the MAC frame body of the first DL PPDU, and relay a second DL PPDU including the acquired MAC frame body to a nearby non-AP STA. In addition, a relay STA can receive a first UL PPDU from a nearby non-AP STA, acquire the MAC frame body of the first UL PPDU, and relay a second UL PPDU including the acquired MAC frame body to an AP STA.

Third, the relay STA of the present specification may be implemented based on multi-link. For example, the above-described relay function/operation/procedure can be performed based on a plurality of links described in Figure 4 of the present specification, etc. That is, a specific non-AP MLD may operate as a relay STA, and in this case, a first PPDU may be received through a first link included in the corresponding non-AP MLD. A relay STA can relay the first PPDU received through the first link to another STA through a second link. For example, the first link may operate as a DL link (or a UL link), and the second link may operate as a UL link (or a DL link).

As described above, the present specification is described based on the IEEE 802.11bn or UHR (ultra-high reliability) standard that improves upon IEEE 802.11be. The specific details are as follows.

Next Wi-Fi (beyond 11be) aims to support ultra-high reliability in signal transmission to a STA. For this, various technologies are being considered to support high throughput, low latency, and extended range. In order to extend reliable transmission and Wi-Fi coverage/range for not only outdoor but also various IoT devices, an AP may transmit signals to STAs or receive signals from STAs using relay operation. That is, through relay operation, signals are transmitted and received between a relay STA and a non-AP STA. As such, for signal transmission and reception between a relay STA and non-AP STA(s), an AP detects the non-AP STA(s) located near the relay STA and decides whether to perform relay transmission. In the present specification, a method is defined for an AP to detect the non-AP STA(s) located near a relay STA for signal transmission and reception through relaying.

In the next-generation wireless LAN system (e.g., a UHR system based on IEEE 802.11bn), use of the above-described relay STA is being considered in order to achieve stable signal transmission (i.e., reliable signal transmission) regardless of the location of a STA within a BSS, and to increase coverage for signal transmission and to eliminate holes where signals cannot reach.

As described above, a relay STA performs various functions/operations/procedures and can be implemented in various ways. In the present specification, in order to easily implement a relay STA and reduce operational complexity, a relay STA controlled by an AP is considered. However, the relay STA and related operations of the present specification are not limited to AP controlled relay transmission, and may be applied to all relay transmission and reception.

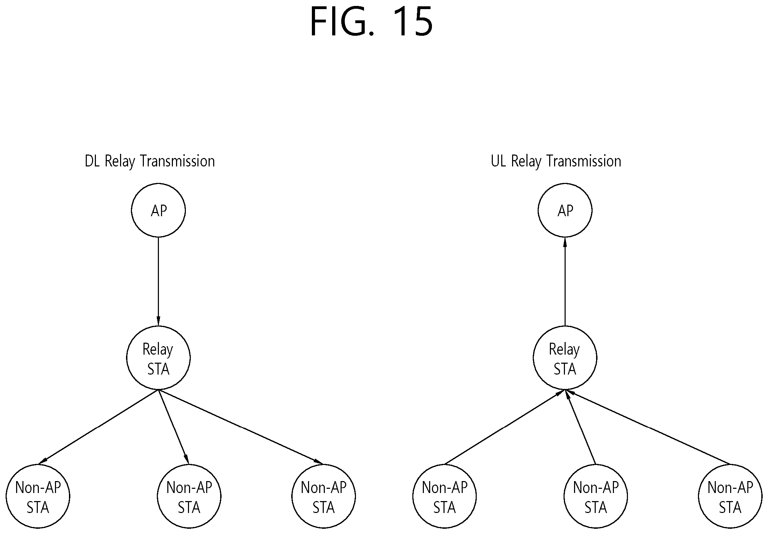

Figure 15 illustrates characteristics of a relay STA controlled by an AP.

As illustrated, an example of a relay STA may be an AP controlled relay STA (ACRS). An ACRS performs relay transmission for data received from an AP within a BSS, and at this time, the AP performs control of the ACRS for relaying. That is, based on control information received from the AP, the ACRS may transmit a signal received from the AP to an end-user/STA, or a relay STA that has received signals from a plurality of non-AP STAs may transmit the corresponding signals to the AP.

The ACRS may operate as an independent relay device that performs only relay transmission, or may operate as a non-AP STA that supports relaying.

The following provides a more detailed description of information exchanged within a BSS through management frames and the like in the present specification.

A relay STA used in the present specification may be referred to by various names. For example, it may be referred to by various names such as Relay, ACRS, relay entity, relay device, and the like.

The following describes various procedures for negotiating control information related to the operation of a relay STA. The relay operation/function/procedure performed by the relay STA of the present specification may be referred to as relay operation. This term "relay operation" may be changed to various names such as relay function/procedure/transmission. Meanwhile, various control information/variables related to relay operation (e.g., parameters/control bits related to bandwidth, streams, MCS, etc.) may be referred to as relay operation parameter(s). Such relay operation parameters may be changed to various names such as relay (control) information/bits/signals.

In order to indicate that relay operation, which involves signal transmission and reception through a relay STA as described above, is taking place within a BSS, an AP STA may use a management frame (e.g., a beacon frame and/or a probe response frame). Specifically, based on a management frame (e.g., a beacon frame and/or a probe response frame), the AP STA can indicate to STAs within the BSS information related to whether relay operation is supported/performed/activated. Specifically, the AP may transmit a management frame (e.g., a beacon frame) including a specific control information/field/signal (e.g., relay operation and/or relay operation support information/field). The relay operation information/field may be expressed in various terms. For example, in addition to relay operation information/field, terms such as relay operation parameter(s), relay operation support parameter(s), relay operation element(s), relay operation support element(s), and the like may be used.

For example, the relay operation information/field is defined using order 92 or a reserved value in a beacon frame body. For example, a conventional beacon frame body includes information corresponding to order 1 through order 91. For example, information corresponding to existing order 1 is timestamp information, and information corresponding to order 2 is Beacon Interval information. For example, the relay operation information/field may be included at a position following the information corresponding to order 91 (e.g., WUR discovery information).

For example, when the AP supports relay operation, various management frames (e.g., (Re)Association Request/Response frame format, Probe Request/Response frame format, (De)Authentication frame format) exchanged between the AP and a non-AP STA may include information related to the above-described relay operation.

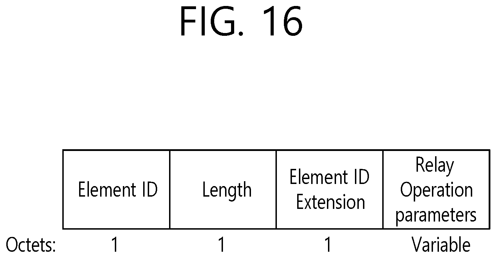

Figure 16 is an example of a management frame including information related to a relay operation. According to the example of Figure 16, various management frames (e.g., (Re)Association Request/Response frame format, Probe Request/Response frame format, (De)Authentication frame format) may include information related to the above-described relay operation.

The relay operation parameter may include various information related to the above-described relay operation. For example, the relay operation parameter may include information related to the bandwidth (BW) for relay transmission, information related to the direction of relay transmission (e.g., DL/UL), information related to the number of streams used for relay transmission (e.g., Max Nss), MCS information used for relay transmission, information related to the number of STAs used for relay transmission (e.g., information related to the number of non-AP STAs/MLDs), and/or information related to whether beamforming is supported for relay transmission (e.g., beamformed information).

A relay STA and a non-AP STA performing relay transmission can indicate whether relay transmission and reception are supported using capabilities element(s) (or capability element(s)). The capabilities element may be included in various management frames (e.g., (Re)Association Request/Response frame format, Probe Request/Response frame format, (De)Authentication frame format). The capabilities element(s) may be included in the management frame of Figure 16, or may be included in a separate management frame.

At this time, the detailed structure of the capability element(s) (or capabilities element(s)) may be defined in various ways. For example, the capability element(s) may include a relay subfield and a relay support field. The relay subfield may be used as an indication of whether (the STA carrying the corresponding subfield) can operate as a relay STA. The relay support subfield indicates support for signal transmission and reception through a relay STA, i.e., through relaying. The two subfields may each consist of 1 bit. For example, a specific relay STA sets the relay subfield to 1 to indicate that it is a relay STA. In addition, since the relay STA participates in relaying and transmits and receives signals, the relay support subfield is also set to 1. On the other hand, a non-AP STA that transmits and receives signals through relaying does not operate as a relay STA, so the relay subfield can be set to 0. However, since the non-AP STA supports signal transmission and reception through relaying, the relay support subfield is set to 1.

Accordingly, within the capability element(s) (or capabilities element(s)), only the relay STA and non-AP STA with the relay support subfield set to 1 may perform relay transmission and reception within the BSS.

The capability element(s) may be variously modified.

For example, the capability element(s) including the relay subfield and the relay support subfield may be included within an element related to HE/EHT/UHR/Next-WIFI. In addition, the capability element(s) including the relay subfield and the relay support subfield may be determined based on whether the non-AP STA performing relay operation is HE/EHT/UHR/Next-WIFI.

As described above, through the capability element(s), the relay STA may be defined as an independent STA that performs relaying operation/procedure/function/transmission, or may be defined as a non-AP STA with relay STA capability.

An AP (or a first STA, AP MLD, etc.) may transmit signals using a relay (or relay STA, relay entity, ACRS, etc.) for QoS improvement in terms of RvR (Rate versus Range) and for signal transmission to a non-AP STA that is outside the AP's coverage. The capability of the AP's relay support and relay operation/communication may be transmitted through a beacon frame (or various management frames such as (Re)Association Request/Response frame format, Probe Request/Response frame format, (De)Authentication frame format, etc.). At this time, information related to the relay STA recognized by the AP may also be transmitted together.

A non-AP STA (or end-STA) performing relaying may or may not receive information related to the AP's relay support and capability, and information related to the relay STA, through a beacon frame (or the various management frames described above).

In order to efficiently perform relay operation, an end-STA (or non-AP STA) supporting relay operation may detect/discover a relay STA appropriate for itself, and may perform relay operation based on the corresponding relay STA. Additionally or alternatively, the detection/discovery of a relay STA for the relay operation may be performed by the non-AP STA (i.e., end-STA).

Technical feature 1. For example, detection/discovery of a relay STA may be based on whether an end-STA (or non-AP STA) (e.g., in advance) receives a beacon frame (or the various management frames described above). The beacon frame (or the various management frames described above) may include identification information (or ID information) related to at least one relay STA. For example, the information related to a relay STA ID may be various information capable of identifying at least one relay STA. For example, information capable of identifying one relay STA may be all/part of an AID (Association ID) for the corresponding relay STA, or all/part of a MAC address. Additionally or alternatively, the beacon frame (or the various management frames described above) may include capability information related to at least one relay STA. For example, the capability information related to the at least one relay STA may include information related to the capability of each relay STA (e.g., at least one of BW supported by the corresponding relay STA, Max/Min Nss, Max/Min MCS, Max/Min Data rate, coding type (BCC/LDPC), UL relay operation indication, and DL relay operation indication).

For example, the operation when an end-STA (or non-AP STA) successfully receives a beacon frame (or the various management frames described above), and the operation when the end-STA (or non-AP STA) fails to successfully receive the beacon frame (or the various management frames described above), may be defined differently as follows.

Technical feature 1.1. For example, a non-AP STA that has identified information related to relay STA(s) (e.g., identification information/relay ID(s) related to at least one relay STA, and/or number of relay STAs, etc.) identified through reception of a beacon frame (or the various management frames described above) may transmit a relay probing/discovery frame (or a management frame of various names) for discovery of the corresponding relay STA(s) based on unicast transmission or multicast transmission.

Technical feature 1.2. For example, when a beacon frame (or the various management frames described above) has not been received, or when a signal was normally received but information related to a relay STA could not be identified/obtained through the beacon frame, a non-AP STA may transmit a probing/discovery frame for detecting/discovering a relay STA based on broadcasting transmission.

In other words, an address field of a management frame (e.g., various frames such as probing/discovery frame, etc.) for detecting/discovering a relay STA may be configured differently based on whether a non-AP STA or end-STA has obtained information related to at least one relay STA through a beacon/management frame in advance. That is, when information related to at least one relay STA has been obtained in advance, the address field may include a value corresponding to a unicast/multicast address, and if not, the address field may include a value corresponding to a broadcast address.

For example, in the present specification, the relay probing/discovery frame may be a management frame transmitted by an end-STA (or non-AP STA) to discover/detect at least one relay STA. The relay probing/discovery frame may be referred to by various names, and may be referred to as, for example, a discovery frame or a first/second management frame. For example, the relay probing/discovery frame may be transmitted from an end-STA (or non-AP STA) to at least one relay STA.

Technical feature 2. As described above, a relay discovery/probing frame (or a management frame of various names) transmitted by a non-AP STA or end-STA may be configured to include the following information.

Technical feature 2.1. The relay discovery/probing frame may include relay capabilities information (or information/fields of various names) as follows.

Technical feature 2.1.1. For example, an information/field related to BW (Bandwidth) may be included. For example, the information/field may be referred to as a BW information/field.

Technical feature 2.1.1.1. For example, the BW information/field may include information related to the transmission channel size between a relay STA and a non-AP STA during relay transmission. For example, the BW information/field may indicate 20/40/80/160/320 MHz, etc.

Technical feature 2.1.2. For example, an information/field related to Max Nss may be included. For example, the information/field may be referred to as a Max Nss information/field.

Technical feature 2.1.2.1. For example, the Max Nss information/field may include information related to the maximum number of spatial streams supported during relay transmission. For example, the information/field may indicate a value of up to 8.

Technical feature 2.1.3. For example, an information/field related to Max MCS may be included. For example, the information/field may be referred to as a Max MCS information/field.

Technical feature 2.1.3.1. The information/field may indicate the maximum MCS index supported during relay transmission. For example, the information/field may be configured based on the hardware capacity/capability of the STA transmitting the corresponding relay discovery/probing frame.

Technical feature 2.1.4. For example, an information/field related to beamforming support may be included. For example, the information/field may be referred to as a beamforming support information/field.

Technical feature 2.1.4.1. The information/field may include information related to whether beamforming transmission between a relay STA and a non-AP STA is supported during relay transmission.

Technical feature 2.1.5. For example, an information/field related to Coding (e.g., at least one of BCC and LDPC) may be included. The coding information/field may include information related to whether a BCC coding technique or an LDPC coding technique is supported during relay transmission.

Technical feature 2.1.6. For example, an information/field related to DL/UL may be included. For example, the information/field may be referred to as a DL/UL information/field.

Technical feature 2.1.6.1. The information/field may indicate whether DL or UL transmission is supported for relay transmission. The information/field may have various lengths such as 1 bit or 2 bits. For example, the information/field may consist of 2 bits to indicate DL only, UL only, and both. At this time, unused indexes are set to reserved. For example, a first value of the 2-bit information may be set for DL only (e.g., relay operation is performed for a signal/frame addressed to an end-STA). For example, a second value of the 2-bit information may be set for UL only (e.g., relay operation is related to a signal/frame addressed to an AP). For example, a third value of the 2-bit information may be set for both (e.g., relay operation is performed for signals/frames addressed to both an AP and an end-STA). For example, a fourth value of the 2-bit information may be a reserved value. It is not necessary for all of the first through fourth values described above to be used, and it is also possible that only at least one of the first through fourth values is used for the DL/UL information/field.

Technical feature 2.1.7. For example, the Nss and/or MCS information/field may be configured differently based on the BW information/field. For example, the Nss and/or MCS information/field may be configured for each BW and transmitted together.

Technical feature 2.2. The relay discovery/probing frame may include the following: Requirement for relay transmission between relay STA and end-STA (or information/fields of various names).

Technical feature 2.2.1. At least one field (or information) described below may indicate transmission information required by a non-AP STA during relay transmission. At least one of the following fields (or information) may be included in the relay discovery/probing frame.

Technical feature 2.2.1.1. For example, an information/field for MCS may be included. A more detailed description is as follows. For example, the information/field related to MCS may be determined in consideration of the QoS required for a service/session configured through relay operation. Additionally or alternatively, the information/field may be configured based on the hardware capacity/capability of the STA (and/or relay STA) transmitting the corresponding relay discovery/probing frame.

Technical feature 2.2.1.1.1. Additionally or alternatively, the above-described MCS information may indicate the minimum/maximum MCS index required by a non-AP STA for QoS or range extension during relay transmission.

Technical feature 2.2.1.1.2. Additionally or alternatively, the above-described MCS information may be configured to include both Min (minimum index) and max (maximum index), or may be configured as a single piece of information.

Technical feature 2.2.1.2. For example, an information/field for Data rate may be included.

Technical feature 2.2.1.2.1. For example, the information/field may indicate the minimum/maximum data rate required for signal transmission and reception between a relay STA and a non-AP STA.

Technical feature 2.2.1.2.2. For example, the information/field may be configured to include both Min and max, or may be configured as a single piece of information.

Technical feature 2.2.1.3. For example, an information/field for Nss may be included.

Technical feature 2.2.1.3.1. For example, the information/field may indicate the minimum/maximum number of spatial streams required for signal transmission and reception between a relay STA and a non-AP STA.

Technical feature 2.2.1.3.2. For example, the information/field may be configured to include both Min and max, or may be configured as a single piece of information.

Technical feature 2.2.2. The requirement information (e.g., at least one of MCS, Data Rate, and/or Nss) may be configured as an element or field and included in the detection frame or discovery frame. As an example, a relay requirement element may be configured as follows.

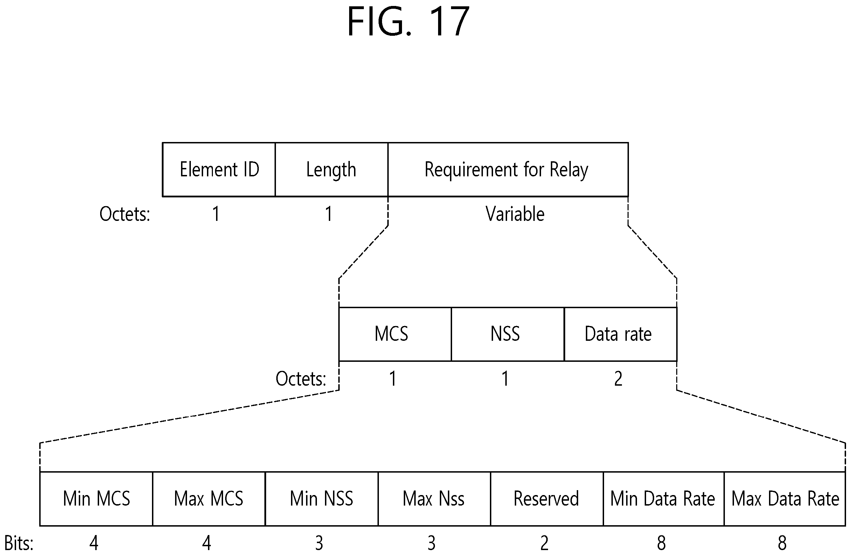

Technical feature 2.2.2.1. As an example, when configured to include min and max, a relay requirement element may be configured as in the example of Figure 17.

Figure 17 illustrates an example of a discovery frame transmitted by a non-AP STA. As illustrated, the above-described MCS information/field, NSS information/field, and Data information/field may be included in the example of Figure 17. However, the example of Figure 17 may be variously modified. Additionally or alternatively, at least any one of MCS/NSS/Data information may be omitted. Additionally or alternatively, only a portion of min/max may be included for each piece of included information. Additionally or alternatively, various information not shown in Figure 17 (e.g., at least one of BW, Max NSS, Max MCS, beamforming support, Coding, and DL/UL described in technical feature 2.1) may additionally be included.

Technical feature 3. For example, the relay requirement element (e.g., the element shown in Figure 17) may be included in the discovery frame proposed by the present specification. As described above, the discovery frame may be various management frames. Accordingly, the relay requirement element may be included in and transmitted in (Re)Association Request/Response frame format, Probe Request/Response frame format, (De)Authentication frame, and the like.

Technical feature 4. A relay STA that has received a relay discovery/probing frame (i.e., the discovery frame) may ascertain information related to the relay capability for the non-AP STA and the requirements requested by the end-STA during relay transmission.

The following describes an example of an operation following the transmission and reception of the discovery frame (i.e., relay discovery/probing frame).

Technical feature 5. For example, a relay STA that has received a probing/discovery frame (i.e., the discovery frame) transmitted by a non-AP STA may transmit an ACK frame for the same after a SIFS. For example, a response frame for the frame received after a SIFS from the point when the ACK frame was transmitted may be transmitted from the relay STA to the non-AP STA. In the above operation, ACK transmission is not necessarily mandatory, and the ACK transmission may be omitted.

The following describes a response frame that is transmitted/received in response to the discovery frame (i.e., relay discovery/probing frame). For example, in the present specification, a response frame may be a response to the discovery frame (i.e., relay discovery/probing frame). For example, the response frame may be referred to by various names such as a relay discovery response frame, a discovery response frame, a probing response frame, and the like. For example, the response frame may be transmitted by at least one relay STA to the end-STA or non-AP. For example, the response frame may consist of a management frame. For example, the response frame may be configured based on a probe response, or may be configured based on a management frame of various formats such as an association response, a reassociation response, and the like.

Technical feature 6. A response frame transmitted by at least one relay STA may include at least one of the following various fields (or information).

Technical feature 6.1. For example, a field/information related to a status code may be included in the response frame.

Technical feature 6.1.1. The information/field may include information related to whether to accept the relay transmission/operation received from a non-AP STA and/or information related to whether the requirement requested by the non-AP STA (or the discovery frame) during relay operation is supported.

Technical feature 6.1.2. For example, the information/field may consist of 2 bits. A first value of the 2-bit information may indicate success, a second value of the 2-bit information may indicate reject, and a third value of the 2-bit information may indicate reject and alternative parameters. In addition, a fourth value of the 2-bit information may be a reserved value. All of the first through fourth values of the 2 bits may not be used, and the field/information related to the status code may be configured based on at least one of the first through fourth values.

Technical feature 6.1.2.1. For example, reject with alternative parameter(s) related to the third value of the 2-bit information may indicate that although the requirement of the end-STA cannot be satisfied, relay operation can be performed by supporting the alternatively proposed parameter(s).

Technical feature 6.2. For example, information related to a relay STA ID may be included in the response frame. For example, the information related to the relay STA ID may be various information capable of identifying at least one relay STA. For example, information capable of identifying one relay STA may be all/part of the AID for the corresponding relay STA, all/part of the MAC address, or information in the same format as the information related to at least one relay STA included in the discovery.

Technical feature 6.2.1. That is, information related to a relay STA ID may indicate the ID and/or STA-ID of the relay STA transmitting the response frame.

Technical feature 6.3. For example, link quality information may be included in the response frame. Additionally or alternatively, the link quality information may be link quality information measured through the discovery frame (i.e., discovery or probing frame) transmitted by an end-STA (or non-AP STA). Additionally or alternatively, the link quality information may refer to information related to the quality (e.g., SINR/CQI, etc.) between the channel/link/subchannel/band between at least one relay STA and the non-AP STA that transmitted the discovery frame.

Technical feature 6.3.1. For example, the link quality information may be configured based on SINR or CQI measured by the at least one relay STA.

Technical feature 6.4. For example, information related to suggested relay parameter(s) may be included in the response frame.

Technical feature 6.4.1. For example, the information related to the suggested relay parameter(s) may be omitted when the status code is related to success or reject.

Technical feature 6.4.2. For example, the information related to the suggested relay parameter(s) may be transmitted when a relay STA cannot support the relay requirement parameter(s) transmitted by a non-AP STA but can support the same with some requirements changed.

Technical feature 6.4.2.1. For example, the information related to the suggested relay parameter(s) may be transmitted when the status code is set to reject and alternative parameter(s).

An example of an operation following the transmission of the above-described response frame from at least one relay STA to an end-STA (or non-AP STA) may be as follows.

Technical feature 7. An end-STA that has received a response frame from at least one relay STA may transmit an ACK frame for the same. The operation of transmitting the ACK may be omitted.

Technical feature 8. A non-AP STA (i.e., end-STA) can select a relay STA appropriate for itself using information included in a response frame received from at least one relay STA (e.g., information related to link quality and/or whether requirements are supported).

For relay STA discovery/detection, probe request and response frames may be used as discovery/detection frames and response frames exchanged between a non-AP STA and a relay STA, and at this time, probe request and response frames may be defined to include the element/field defined above.

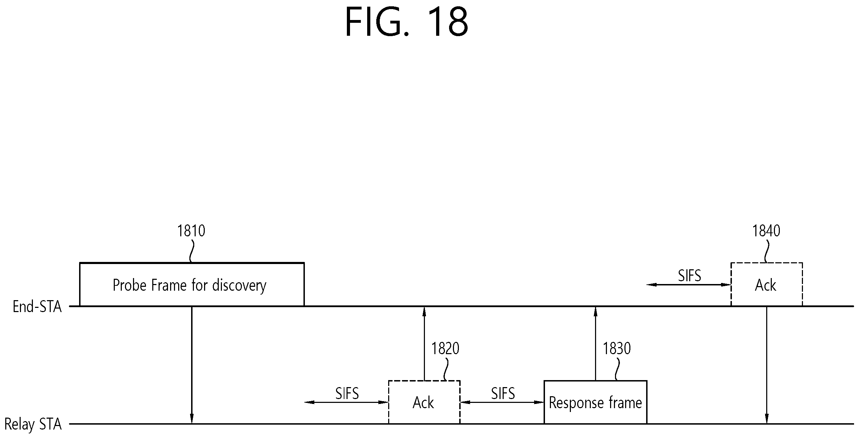

Figure 18 is a diagram illustrating a procedure performed at a relay STA and a non-AP STA.

As illustrated, a non-AP may transmit a discovery frame (1810) to at least one relay STA. The individual detailed features of the above-described technical feature 2, technical feature 3, and/or technical feature 4 may be applied to the discovery frame.

At least one relay STA that has received the discovery frame may transmit an ACK frame (1820) to the non-AP STA. The IFS configured between the ACK frame (1820) and the discovery frame (1810) may be set to Short IFS (SIFS). The detailed feature of the above-described technical feature 5 may be applied to the ACK frame (1820).

At least one relay STA that has received the discovery frame (1810) may transmit a response frame (1830) to the non-AP STA. The detailed feature of the above-described technical feature 6 may be applied to the response frame (1830). The IFS configured between the response frame (1830) and the ACK frame (1820) may be set to Short IFS (SIFS).

The non-AP STA that has received the response frame (1830) may transmit an ACK frame (1840) to the relay STA. The detailed feature of the above-described technical feature 7 may be applied to the ACK frame (1840).

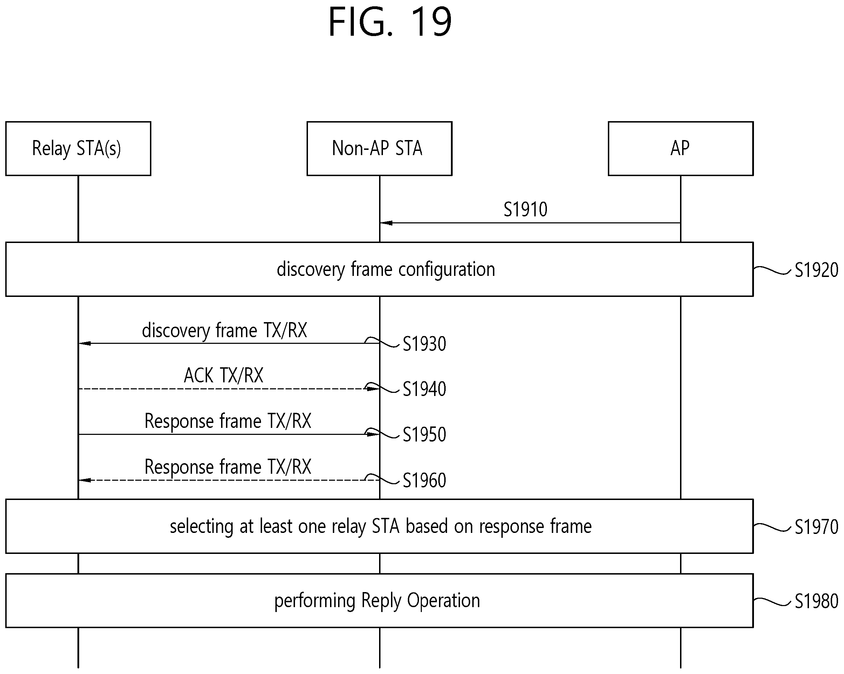

Figure 19 is a procedure flowchart based on an example of the present specification.

As illustrated, an AP may transmit a signal/frame to a non-AP STA (or end STA) (S1910). The individual detailed features of the above-described technical feature 1 may be applied to the signal/frame. For example, the signal/frame of S1910 may be a management frame used for detection/discovery of a relay STA. Additionally or alternatively, the signal/frame of S1910 may be various management frames such as a beacon frame, a probe response frame, and the like.

Although not shown in Figure 19, at least one relay STA in Figure 19 may perform a step of transmitting and receiving signals with the AP. For example, at least one relay STA may perform operations such as exchanging signals (e.g., management frames) with the AP, exchanging association request/responses, and the like. Through this, the AP can acquire identification information/capability information related to at least one relay STA.

Through S1910, a non-AP STA can acquire identification information (and capability information, etc.) related to at least one relay STA.

The non-AP STA of Figure 19 may configure a discovery frame based on S1910 (S1920). Additionally or alternatively, the detailed features of the above-described technical feature 1.1 to technical feature 1.2 may be applied to S1920. For example, when a signal has not been received through step S1910, or when information related to at least one relay STA (e.g., identification information/capability information) has not been obtained through step S1910, the discovery frame of step S1920 may be transmitted based on a broadcasting technique. For example, when information related to at least one relay STA (e.g., identification information/capability information) has been obtained through step S1910, the discovery frame of step S1920 may be transmitted based on a unicast or multicast technique.

The non-AP of Figure 19 may transmit a discovery frame to at least one relay STA (S1930). For example, the discovery frame of step S1920/S1930 may be identical to the discovery frame (1810) of Figure 18. For example, the individual detailed features of the above-described technical feature 2, technical feature 3, and/or technical feature 4 may be applied to the discovery frame of step S1920/S1930.

At least one relay STA that has received the discovery frame may transmit an ACK frame to the non-AP STA (S1940). The IFS configured between the ACK frame of step S1940 and the discovery frame may be set to Short IFS (SIFS). The detailed feature of the above-described technical feature 5 may be applied to the ACK frame (1820). The ACK frame of step S1940 may be identical to the ACK frame (1820) of Figure 18.

At least one relay STA that has received the discovery frame may transmit a response frame to the non-AP STA (S1950). The detailed feature of the above-described technical feature 6 may be applied to the response frame. The IFS configured between the response frame of step S1950 and the ACK frame of step S1940 may be set to Short IFS (SIFS). The response frame of step S1950 may be identical to the response frame (1830) of Figure 18.

The non-AP STA that has received the response frame (1830) may transmit an ACK frame (1840) to the relay STA (S1960). The detailed feature of the above-described technical feature 7 may be applied to the ACK frame (1840).

The illustrated non-AP STA may select at least one relay STA based on the received response frame (S1970). Through step S1970, the non-AP STA (i.e., end-STA) can select a relay STA appropriate for itself using information included in a response frame received from at least one relay STA (e.g., information related to link quality and/or whether requirements are supported).

Through step S1980, an AP, a non-AP STA, and a relay STA may perform relay operation. For example, step S1980 may be performed based on at least one of steps S1910 through S1970 performed in advance. For example, when relay operation related to downlink is performed, a signal/frame/traffic addressed to a non-AP STA may be delivered to the non-AP STA through at least one relay STA. For example, when relay operation related to uplink is performed, a signal/frame/traffic addressed to an AP may be delivered to the AP through at least one relay STA.

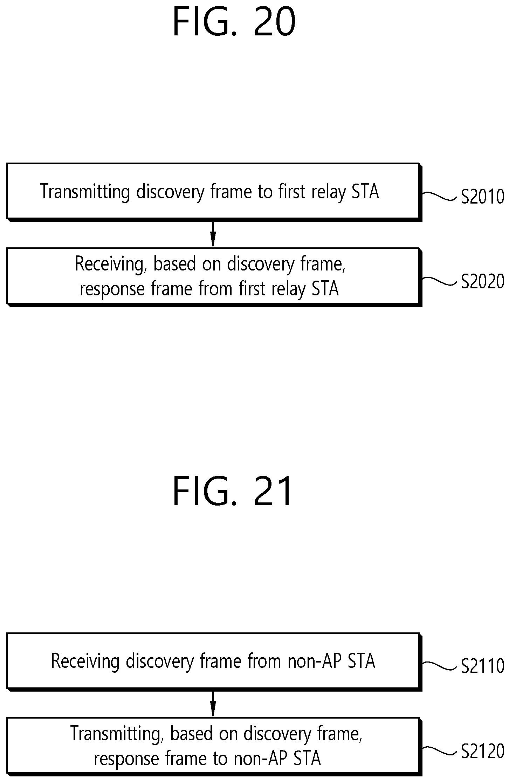

Figure 20 is an example of a procedure flowchart of the present specification.

Each step of Figure 20 may be performed by various STAs (AP-STA, relay STA, non-AP STA) of a WLAN system. For example, it is preferable that each step of Figure 20 is performed by a non-AP STA.

The illustrated step S2010 relates to a step of transmitting a discovery frame to a first relay STA. The discovery frame may include identification information related to at least one relay STA obtained by the non-AP STA.

Additionally or alternatively, the discovery frame includes information related to a relay operation between the non-AP STA and the first relay STA, and the information related to the relay operation may include at least one of information related to a channel bandwidth related to the relay operation, information related to a spatial stream related to the relay operation, MCS (Modulation and Coding Scheme) information related to the relay operation, information related to whether beamforming related to the relay operation is supported, information related to a channel coding type related to the relay operation, and information related to a direction of the relay operation.

Additionally or alternatively, the information related to the spatial stream related to the relay operation may include information related to a maximum spatial stream related to the relay operation.

Additionally or alternatively, the MCS information related to the relay operation may include information related to a maximum MCS index related to the relay operation.

Additionally or alternatively, the information related to the channel coding type related to the relay operation may include information indicating any one of BCC (binary convolution coding) and LDPC (low density parity check).

Additionally or alternatively, the information related to the direction of the relay operation may include information indicating any one of uplink and downlink.

Additionally or alternatively, the discovery frame may include information required for a relay operation between the non-AP STA and the first relay STA.

Additionally or alternatively, the information required for the relay operation may include maximum MCS information and minimum MCS information related to the relay operation.

Additionally or alternatively, the information required for the relay operation may further include maximum spatial stream information and minimum spatial stream information related to the relay operation.

Additionally or alternatively, the information required for the relay operation may further include maximum data rate information and minimum data rate information related to the relay operation.

The illustrated step S2010 may be identical to step S1930 of Figure 19. Additionally or alternatively, the discovery frame of step S2010 may be identical to the discovery (1820) of Figure 18. Additionally or alternatively, the discovery frame of step 2010 may be identical to the relay discovery/probing frame described in the present specification.

The illustrated step S2020 relates to a step of receiving, based on the discovery frame, a response frame from the first relay STA. For example, the response frame may include identification information related to the first relay STA, and link quality information between the first relay STA and the non-AP STA.

Additionally or alternatively, the response frame may further include status information related to whether a relay operation requested by the non-AP STA is accepted. For example, the status information is configured based on 2-bit information, and a first value of the 2-bit information may be set for a case where the relay operation requested by the non-AP STA is rejected and an alternative parameter is proposed by the first relay STA.

Additionally or alternatively, the link quality information between the first relay STA and the non-AP STA may be configured based on CQI (Channel Quality Indication) or SINR (Signal-to-Interference-plus-Noise Ratio).

Figure 21 is an example of a procedure flowchart of the present specification.

Each step of Figure 21 may be performed by various STAs (AP-STA, relay STA, non-AP STA) of a WLAN system. For example, it is preferable that each step of Figure 21 is performed by at least one relay STA.

The illustrated step S2110 may include the technical features of step S2010 as is. In addition, the illustrated step S2120 may include the technical features of step S2020 as is.

The technical features of the present specification may be performed by various devices. The device of the present specification may be the device described in Figure 1/Figure 14. The device of the present specification may include at least one processor; and at least one computer memory that is operably connectable to the at least one processor and stores instructions that, based on being executed by the at least one processor, perform operations.

For example, the processor may be the processor described in Figure 1 and/or Figure 14. That is, as described above, the processor of the present specification may include at least one of a DSP (digital signal processor), a CPU (central processing unit), a GPU (graphics processing unit), and a modem (modulator and demodulator). The processor includes not only computers with various architectures such as single/multiple processor architectures and sequential (Von Neumann)/parallel architectures, but also specialized circuits such as FPGAs, ASICs, signal processing devices, and other devices. For example, the processor of the present specification may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or a processor that enhances these.

For example, the instructions may refer to computer program instructions executed by the at least one processor. The (computer program) instructions provide logic and/or routines that allow the technical features of the present specification to be performed by the processor. The at least one processor may read the at least one memory, thereby loading and executing a computer program.

The computer program(s) defined by the instructions may arrive at the device (e.g., STA) of the present specification through an appropriate delivery mechanism. The delivery mechanism may be, for example, a computer-readable storage medium, a computer program product, a memory device, a recording medium such as a CD-ROM or DVD, or an article of manufacture that tangibly embodies the computer program. The delivery mechanism may be a signal configured to reliably transmit a computer program via a wireless or electrical connection.

The (computer program) instructions may include software or firmware for a programmable processor (e.g., programmable content of a hardware device whether instructions for a processor, or configuration settings for a fixed-function device, gate array or programmable logic device, etc.).

For example, the memory may be the memory described in Figure 1 and/or Figure 14. That is, as described above, the memory of the present specification may store control information related to the operation of the STA of the present specification, or information related to signals transmitted and received by the corresponding STA (e.g., a PPDU including management/control/data frames).

The technical features of the present specification may also be implemented as at least one computer readable medium (CRM). The CRM includes instructions based on being executed by the at least one processor described above. The instructions stored in the CRM may be the above-described computer program instructions.

The device of the present specification may further include a transceiver. The transceiver may be operably connectable to the memory/processor, etc. The transceiver may be the transceiver shown in Figure 1 and/or Figure 14.

The above-described technical features of the present specification are applicable to various applications or business models. For example, the above-described technical features may be applied for wireless communication in a device that supports artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

## Claims

1. A method performed in a wireless local area network (WLAN) system, the method comprising:
transmitting, by a non-access point (non-AP) station (STA), a discovery frame to a first relay STA,
wherein the discovery frame includes identification information related to at least one relay STA obtained by the non-AP STA; and
receiving, based on the discovery frame, a response frame from the first relay STA,
wherein the response frame includes identification information related to the first relay STA, and link quality information between the first relay STA and the non-AP STA.

2. The method of claim 1, wherein the discovery frame includes information related to a relay operation between the non-AP STA and the first relay STA, and
wherein the information related to the relay operation includes at least one of information related to a channel bandwidth related to the relay operation, information related to a spatial stream related to the relay operation, modulation and coding scheme (MCS) information related to the relay operation, information related to whether beamforming related to the relay operation is supported, information related to a channel coding type related to the relay operation, and information related to a direction of the relay operation.

3. The method of claim 2, wherein the information related to the spatial stream related to the relay operation includes information related to a maximum spatial stream related to the relay operation,
wherein the MCS information related to the relay operation includes information related to a maximum MCS index related to the relay operation,
wherein the information related to the channel coding type related to the relay operation includes information indicating any one of binary convolution coding (BCC) and low density parity check (LDPC), and
wherein the information related to the direction of the relay operation includes information indicating any one of uplink and downlink.

4. The method of claim 1, wherein the discovery frame includes information required for a relay operation between the non-AP STA and the first relay STA,
wherein the information required for the relay operation includes maximum MCS information and minimum MCS information related to the relay operation,
wherein the information required for the relay operation further includes maximum spatial stream information and minimum spatial stream information related to the relay operation, and
wherein the information required for the relay operation further includes maximum data rate information and minimum data rate information related to the relay operation.

5. The method of claim 1, wherein the response frame further includes status information related to whether a relay operation requested by the non-AP STA is accepted.

6. The method of claim 5, wherein the status information is configured based on 2-bit information, and a first value of the 2-bit information is set for a case where the relay operation requested by the non-AP STA is rejected and an alternative parameter is proposed by the first relay STA.

7. The method of claim 1, wherein the link quality information between the first relay STA and the non-AP STA is configured based on channel quality indication (CQI) or signal-to-interference-plus-noise ratio (SINR).

8. A non-access point (non-AP) station (STA), comprising:
at least one processor; and
at least one computer memory operatively connected to the at least one processor and storing instructions that, based on being executed by the at least one processor, perform operations comprising:
transmitting, by the non-AP STA, a discovery frame to a first relay STA,
wherein the discovery frame includes identification information related to at least one relay STA obtained by the non-AP STA; and
receiving, based on the discovery frame, a response frame from the first relay STA,
wherein the response frame includes identification information related to the first relay STA, and link quality information between the first relay STA and the non-AP STA.

9. The non-AP STA of claim 8, wherein the instructions of the at least one computer memory perform operations related to any one of claims 2 to 7.

10. A method performed in a wireless local area network (WLAN) system, the method comprising:
receiving, by a first relay STA, a discovery frame from a non-access point (non-AP) station (STA),
wherein the discovery frame includes identification information related to at least one relay STA obtained by the non-AP STA; and
transmitting, by the first relay STA based on the discovery frame, a response frame,
wherein the response frame includes identification information related to the first relay STA, and link quality information between the first relay STA and the non-AP STA.

11. The method of claim 10, wherein the first relay STA performs operations related to any one of claims 2 to 7.

12. A first relay station (relay STA), comprising:
at least one processor; and
at least one computer memory operatively connected to the at least one processor and storing instructions that, based on being executed by the at least one processor, perform operations comprising:
receiving, by the first relay STA, a discovery frame from a non-access point (non-AP) station (STA),
wherein the discovery frame includes identification information related to at least one relay STA obtained by the non-AP STA; and
transmitting, by the first relay STA based on the discovery frame, a response frame,
wherein the response frame includes identification information related to the first relay STA, and link quality information between the first relay STA and the non-AP STA.

13. The first relay STA of claim 12, wherein the first relay STA performs operations related to any one of claims 2 to 7.

14. At least one computer readable medium (CRM) storing instructions that, based on being executed by at least one processor, perform operations comprising:
transmitting, by a non-access point (non-AP) station (STA), a discovery frame to a first relay STA,
wherein the discovery frame includes identification information related to at least one relay STA obtained by the non-AP STA; and
receiving, based on the discovery frame, a response frame from the first relay STA,
wherein the response frame includes identification information related to the first relay STA, and link quality information between the first relay STA and the non-AP STA.
